# EUROPEAN PATENT APPLICATION

(11) **EP 4 668 857 A1**
(43) Date of publication of application: **24.12.2025**
(21) Application number: 24756191.3
(22) Date of filing: 07.02.2024
(51) Int. Cl.: H04W 36/00

(54) **BWP SWITCHING PROCESSING METHOD AND APPARATUS, CONFIGURATION SENDING METHOD AND APPARATUS, AND DEVICE**

(30) Priority: 17.02.2023 CN 202310131462
(71) Applicant: Vivo Mobile Communication Co., Ltd., Dongguan, Guangdong 523863 (CN)
(72) Inventor: CHEN, Li, Dongguan, Guangdong 523863 (CN)
(74) Representative: Cabinet Beaumont
(86) International application number: PCT/CN2024/076509
(87) International publication number: WO 2024/169818

(57) **Abstract**

This application discloses a BWP switching processing method and apparatus, a configuration sending method and apparatus, and a device, and pertains to the field of communication technologies. The BWP switching processing method in embodiments of this application includes: obtaining, by a terminal, a target configuration, where the target configuration is a configuration of at least one of a target operation and a bandwidth part BWP; and performing, by the terminal, at least one of the target operation and BWP switching based on the target configuration in a case that a preset condition corresponding to the target operation or a second BWP is met, where the BWP switching includes switching from a first BWP to the second BWP, where in a case that the target operation and the BWP switching are to be performed, the target operation is preferentially performed, and then the BWP switching is performed; or the BWP switching is preferentially performed, and then the target operation is performed; and the target operation includes at least one of the following: initiating SDT, paging monitoring, PEI monitoring, wake-up signal WUS monitoring, random access, and system information receiving.

## Description

### CROSS-REFERENCE TO RELATED APPLICATIONS

This application claims priority to Chinese Patent Application No. 202310131462.6, filed in China on February 17, 2023, which is incorporated herein by reference in its entirety.

### TECHNICAL FIELD

This application pertains to the field of communication technologies, and specifically relates to a bandwidth part (Bandwidth Part, BWP) switching processing method and apparatus, a configuration sending method and apparatus, and a device.

### BACKGROUND

In some communication systems, a terminal may be configured with a plurality of bandwidth parts (Bandwidth Part, BWP), for example, configured with an initial BWP (initial BWP) and a separate initial BWP (Separate initial BWP). In this way, the terminal has a BWP switching scenario. However, the terminal may further perform another operation during BWP switching, for example, small data transmission (small data transmission, SDT) initiation, paging monitoring, paging early indication (Paging Early Indication, PEI) monitoring, wake-up signal (Wake-up signal, WUS) monitoring, random access, and system information receiving. In some related technologies, processing between BWP switching and the foregoing operations cannot be supported, resulting in relatively poor transmission performance of the terminal.

### SUMMARY

Embodiments of this application provide a BWP switching processing method and apparatus, a configuration sending method and apparatus, and a device, which can resolve a problem of relatively poor transmission performance of a terminal.

According to a first aspect, a BWP switching processing method is provided, including:
obtaining, by a terminal, a target configuration, where the target configuration is a configuration of at least one of a target operation and a bandwidth part BWP; and
performing, by the terminal, at least one of the target operation and BWP switching based on the target configuration in a case that a preset condition corresponding to the target operation or a second BWP is met, where the BWP switching includes switching from a first BWP to the second BWP, where
in a case that the target operation and the BWP switching are to be performed, the target operation is preferentially performed, and then the BWP switching is performed; or the BWP switching is preferentially performed, and then the target operation is performed; and
the target operation includes at least one of the following:
   small data transmission SDT initiation, paging monitoring, PEI monitoring, wake-up signal WUS monitoring, random access, and system information receiving.

According to a second aspect, a configuration sending method is provided, including:
sending, by a network side device, a target configuration to a terminal, where the target configuration is a configuration of at least one of a target operation and a bandwidth part BWP, where
the target configuration is used to perform, by the terminal, at least one of the target operation and BWP switching based on the target configuration in a case that a preset condition corresponding to the target operation or a second BWP is met, where the BWP switching includes switching from a first BWP to the second BWP;
in a case that the target operation and the BWP switching are to be performed, the target operation is preferentially performed, and then the BWP switching is performed; or the BWP switching is preferentially performed, and then the target operation is performed; and
the target operation includes at least one of the following:
   small data transmission SDT initiation, paging monitoring, PEI monitoring, wake-up signal WUS monitoring, random access, and system information receiving.

According to a third aspect, a BWP switching processing apparatus is provided, including:
an obtaining module, configured to obtain a target configuration, where the target configuration is a configuration of at least one of a target operation and a bandwidth part BWP; and
an execution module, configured to perform at least one of the target operation and BWP switching based on the target configuration in a case that a preset condition corresponding to the target operation or a second BWP is met, where the BWP switching includes switching from a first BWP to the second BWP, where
in a case that the target operation and the BWP switching are to be performed, the target operation is preferentially performed, and then the BWP switching is performed; or the BWP switching is preferentially performed, and then the target operation is performed; and
the target operation includes at least one of the following:
   small data transmission SDT initiation, paging monitoring, PEI monitoring, wake-up signal WUS monitoring, random access, and system information receiving.

According to a fourth aspect, a configuration sending apparatus is provided, including:
a sending module, configured to send a target configuration to a terminal, where the target configuration is a configuration of at least one of a target operation and a bandwidth part BWP, where
the target configuration is used to perform, by the terminal, at least one of the target operation and BWP switching based on the target configuration in a case that a preset condition corresponding to the target operation or a second BWP is met, where the BWP switching includes switching from a first BWP to the second BWP;
in a case that the target operation and the BWP switching are to be performed, the target operation is preferentially performed, and then the BWP switching is performed; or the BWP switching is preferentially performed, and then the target operation is performed; and
the target operation includes at least one of the following:
   small data transmission SDT initiation, paging monitoring, PEI monitoring, wake-up signal WUS monitoring, random access, and system information receiving.

According to a fifth aspect, a terminal is provided. The terminal includes a processor and a memory, the memory stores a program or instructions capable of being run on the processor, and when executed by the processor, the program or the instructions implement the steps of the BWP switching processing method provided in the embodiments of this application.

According to a sixth aspect, a terminal is provided, including a processor and a communication interface. The communication interface is configured to obtain a target configuration. The target configuration is a configuration of at least one of a target operation and a bandwidth part BWP. A processor is configured to perform at least one of the target operation and BWP switching based on the target configuration in a case that a preset condition corresponding to the target operation or a second BWP is met. The BWP switching includes switching from a first BWP to the second BWP. In a case that the target operation and the BWP switching are to be performed, the target operation is preferentially performed, and then the BWP switching is performed; or the BWP switching is preferentially performed, and then the target operation is performed; and the target operation includes at least one of the following: small data transmission SDT initiation, paging monitoring, PEI monitoring, wake-up signal WUS monitoring, random access, and system information receiving.

According to a seventh aspect, a network side device is provided. The network side device includes a processor and a memory, the memory stores a program or instructions capable of being run on the processor, and when executed by the processor, the program or the instructions implement the steps of the configuration sending method provided in the embodiments of this application.

According to an eighth aspect, a network side device is provided, including a processor and a communication interface. The communication interface is configured to send a target configuration to a terminal. The target configuration is a configuration of at least one of a target operation and a bandwidth part BWP. The target configuration is used to perform, by the terminal, at least one of the target operation and BWP switching based on the target configuration in a case that a preset condition corresponding to the target operation or a second BWP is met. The BWP switching includes switching from a first BWP to the second BWP. In a case that the target operation and the BWP switching are to be performed, the target operation is preferentially performed, and then the BWP switching is performed; or the BWP switching is preferentially performed, and then the target operation is performed; and the target operation includes at least one of the following: small data transmission SDT initiation, paging monitoring, PEI monitoring, wake-up signal WUS monitoring, random access, and system information receiving.

According to a ninth aspect, a BWP switching processing system is provided, including a terminal and a network side device. The terminal may be configured to perform the steps of the BWP switching processing method provided in the embodiments of this application, and the network side device may be configured to perform the steps of the configuration sending method provided in the embodiments of this application.

According to a tenth aspect, a readable storage medium is provided. The readable storage medium stores a program or instructions, and when executed by a processor, the program or the instructions implement the steps of the BWP switching processing method provided in the embodiments of this application, or implement the steps of the configuration sending method provided in the embodiments of this application.

According to an eleventh aspect, a chip is provided. The chip includes a processor and a communication interface. The communication interface is coupled to the processor. The processor is configured to run a program or instructions to implement the BWP switching processing method provided in the embodiments of this application, or implement the configuration sending method provided in the embodiments of this application.

According to a twelfth aspect, a computer program/program product is provided. The computer program/program product is stored in a storage medium. The computer program/program product is executed by at least one processor to implement the steps of the BWP switching processing method provided in the embodiments of this application, or the computer program/program product is executed by at least one processor to implement the steps of the configuration sending method provided in the embodiments of this application.

In the embodiments of this application, the terminal obtains the target configuration. The target configuration is the configuration of the at least one of the target operation and the bandwidth part BWP. The terminal performs the at least one of the target operation and the BWP switching based on the target configuration in the case that the preset condition corresponding to the target operation or the second BWP is met. The BWP switching includes switching from the first BWP to the second BWP. In the case that the target operation and the BWP switching are to be performed, the target operation is preferentially performed, and then the BWP switching is performed; or the BWP switching is preferentially performed, and then the target operation is performed; and the target operation includes at least one of the following: small data transmission SDT initiation, paging monitoring, PEI monitoring, wake-up signal WUS monitoring, random access, and system information receiving. In this way, the at least one of the target operation and the BWP switching can be performed for a BWP switching scenario, to support processing on the target operation and the BWP switching, thereby improving transmission performance of the terminal.

### BRIEF DESCRIPTION OF DRAWINGS

FIG. 1 is a block diagram of a wireless communication system applicable to an embodiment of this application;
FIG. 2 is a flowchart of a BWP switching processing method according to an embodiment of this application;
FIG. 3 is a flowchart of a configuration sending method according to an embodiment of this application;
FIG. 4 is a structural diagram of a BWP switching processing apparatus according to an embodiment of this application;
FIG. 5 is a structural diagram of a configuration sending apparatus according to an embodiment of this application;
FIG. 6 is a structural diagram of a communication device according to an embodiment of this application;
FIG. 7 is a structural diagram of a terminal according to an embodiment of this application; and
FIG. 8 is a structural diagram of a network side device according to an embodiment of this application.

### DESCRIPTION OF EMBODIMENTS

The following clearly describes technical solutions in embodiments of this application with reference to accompanying drawings in the embodiments of this application. Clearly, the described embodiments are merely some rather than all of the embodiments of this application. All other embodiments obtained by a person of ordinary skill in the art based on embodiments of this application shall fall within the protection scope of this application.

The terms "first", "second", and the like in this application are used to distinguish between similar objects instead of describing a specified order or sequence. It should be understood that, terms used in this way is interchangeable under appropriate circumstances, so that embodiments of this application can be implemented in a sequence other than that illustrated or described herein. Moreover, the terms "first" and "second" typically distinguish between objects of one category rather than limiting a quantity of objects. For example, there can be one or more first objects. In addition, "or" in this application represents at least one of connected objects. For example, "A or B" includes three solutions, that is, solution 1: including A and not including B; solution 2: including B and not including A; and solution 3: including both A and B. The character "/" generally represents an "or" relationship between associated objects.

The term "indication" in this application may be a direct indication (or an explicit indication), or may be an indirect indication (or an implicit indication). The direct indication may be understood as follows: A sending party explicitly notifies, in a sent indication, a receiving party of specific information, an operation that needs to be performed, a requested result, or other content. The indirect indication may be understood as follows: The receiving party determines corresponding information based on the indication sent by the sending party, or performs determining based on the indication sent by the sending party, and determines, based on a determining result, the operation that needs to be performed or the requested result.

It should be noted that a technology described in the embodiments of this application is not limited to a long term evolution (Long Term Evolution, LTE)/LTE-advanced (LTE-Advanced, LTE-A) system, and may be further applied to other wireless communication systems such as a code division multiple access (Code Division Multiple Access, CDMA) system, a time division multiple access (Time Division Multiple Access, TDMA) system, a frequency division multiple access (Frequency Division Multiple Access, FDMA) system, an orthogonal frequency division multiple access (Orthogonal Frequency Division Multiple Access, OFDMA) system, a single-carrier frequency-division multiple access (Single-carrier Frequency-Division Multiple Access, SC-FDMA) system, and another system. The terms "system" and "network" are often used interchangeably in the embodiments of this application. The technology described may be used for the systems and radio technologies described above, as well as other systems and radio technologies. The following describes a new radio (New Radio, NR) system for illustrative purposes, and NR terms are used in most of the following descriptions. However, these technologies are also applicable to systems such as a 6th generation (6th Generation, 6G) communication system other than the NR system.

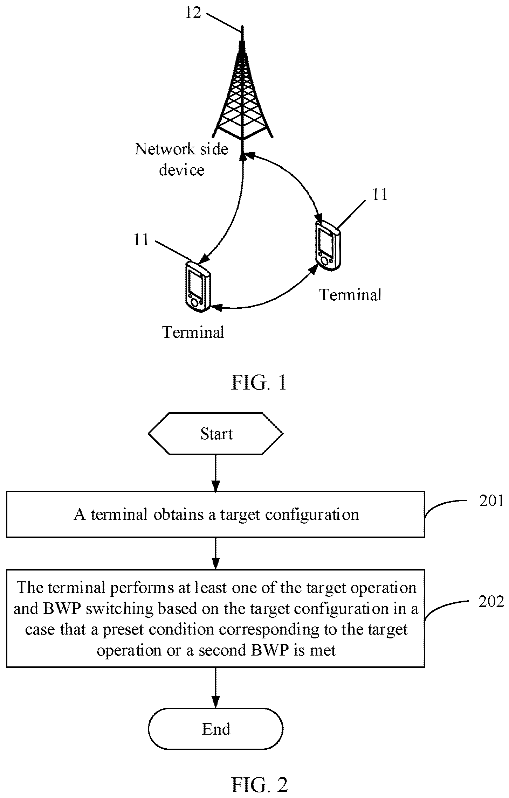

FIG. 1 is a block diagram of a wireless communication system applicable to an embodiment of this application. The wireless communication system includes a terminal 11 and a network side device 12. The terminal 11 may be a mobile phone, a tablet personal computer (Tablet Personal Computer), a laptop computer (Laptop Computer), a notebook computer, a personal digital assistant (Personal Digital Assistant, PDA), a palmtop computer, a netbook, an ultra-mobile personal computer (ultra-mobile personal computer, UMPC), a mobile internet device (Mobile Internet Device, MID), an augmented reality (augmented reality, AR) device, a virtual reality (virtual reality, VR) device, a robot, a wearable device (Wearable Device), a flight vehicle (flight vehicle), vehicle user equipment (Vehicle User Equipment, VUE), ship-mounted equipment, pedestrian user equipment (Pedestrian User Equipment, PUE), a smart home (a home device with a wireless communication function, for example, a refrigerator, a television, a laundry machine, or a furniture), a gaming console, a personal computer (personal computer, PC), a teller machine, a self-service machine, or another terminal side device. The wearable device includes a smart watch, a smart band, a smart headset, smart glasses, smart jewelry (a smart bracelet, a smart wristlet, a smart ring, a smart necklace, a smart anklet, a smart leglet, and the like), a smart wristband, smart clothing, and the like. The vehicle user equipment may also be referred to as a vehicle-mounted terminal, a vehicle-mounted controller, a vehicle-mounted module, a vehicle-mounted component, a vehicle-mounted chip, a vehicle-mounted unit, or the like. It should be noted that a specific type of the terminal 11 is not limited in this embodiment of this application. The network side device 12 may include an access network device or a core network device. The access network device may also be referred to as a radio access network (Radio Access Network, RAN) device, a radio access network function, or a radio access network unit. The access network device may include a base station, a wireless local area network (Wireless Local Area Network, WLAN) access point (Access Point, AS), a wireless fidelity (Wireless Fidelity, Wi-Fi) node, and the like. The base station may be referred to as a NodeB (NodeB, NB), an evolved NodeB (Evolved NodeB, eNB), the next generation NodeB (the next generation NodeB, gNB), a new radio NodeB (New Radio NodeB, NR NodeB), an access point, a relay base station (Relay Base Station, RBS), a serving base station (Serving Base Station, SBS), a base transceiver station (Base Transceiver Station, BTS), a radio base station, a radio transceiver, a basic service set (Basic Service Set, BSS), an extended service set (Extended Service Set, ESS), a home NodeB (home NodeB, HNB), a home evolved NodeB (home evolved NodeB), a transmission reception point (Transmission Reception Point, TRP), or another proper term in the field. The base station is not limited to a specific technical term, provided that the same technical effect is achieved. It should be noted that in this embodiment of this application, only a base station in an NR system is used as an example for description, and a specific type of the base station is not limited.

The core network device may include but is not limited to at least one of the following: a core network node, a core network function, a mobility management entity (Mobility Management Entity, MME), an access and mobility management function (Access and Mobility Management Function, AMF), a session management function (Session Management Function, SMF), a user plane function (User Plane Function, UPF), a policy control function (Policy Control Function, PCF), a policy and charging rules function (Policy and Charging Rules Function, PCRF) unit, an edge application server discovery function (Edge Application Server Discovery Function, EASDF), unified data management (Unified Data Management, UDM), a unified data repository (Unified Data Repository, UDR), a home subscriber server (Home Subscriber Server, HSS), a centralized network configuration (Centralized network configuration, CNC), a network repository function (Network Repository Function, NRF), a network exposure function (Network Exposure Function, NEF), a local NEF (Local NEF or L-NEF), a binding support function (Binding Support Function, BSF), an application function (Application Function, AF), and the like. It should be noted that in the embodiments of this application, only a core network device in the NR system is used as an example for description, and a specific type of the core network device is not limited.

In some implementations, a feature of small data transmission may be that, for a user terminal (User Equipment, UE) in a non-connected state, small data transmission is completed by using a very simple signaling process, to avoid too much signaling overheads caused in a radio resource control (Radio Resource Control, RRC) state transition and an RRC connection establishment process.

In some implementations, in a case of the small data transmission, a current data radio bearer (Data Radio Bearer, DRB) of the terminal is in a suspended state rather than a released state. Before sending a resume request (Resume Request) message, the terminal may resume the DRB, and then use RRC signaling to carry small data. In this case, the terminal may transmit data on the DRB like a terminal in a connected state (CONNECTED UE). In this way, a state transition is avoided, and efficient small data transmission is achieved by using relatively small signaling overheads.

In some implementations, because DRB transmission is used for the small data transmission, access stratum (Access Stratum, AS) security is activated, and therefore, necessary security protection, for example, operations such as data encryption and integrity protection can be performed on data in the small data transmission. From a security perspective, because the terminal may have moved to another base station in the suspended state, a security key used by the terminal to resend a packet in this case needs to be updated. For an update method, refer to an operation of updating a next key based on a parameter that is provided, when the terminal enters the suspended state, by a network side to the terminal to calculate a next-hop key.

In some implementations, to-be-transmitted data of the small data transmission may be carried on a dedicated traffic channel (Dedicated Traffic Channel, DTCH), and is transmitted after being multiplied with an uplink RRC connection resume request (RRCConnectionResumeRequest) message. Similarly, if a downlink message is returned, the downlink message may also be carried on the DTCH, and is multiplied with a downlink RRC connection release (RRCConnectionRelease) message for transmission. Both uplink data and downlink data are encrypted, and an encryption operation is performed based on an updated next key.

In some implementations, the small data may be transmitted on a message 3 (Msg3) physical uplink shared channel (Physical Uplink Shared Channel, PUSCH) in a 4-step random access channel (Random Access Channel, RACH) process. Alternatively, the small data may be transmitted on a message A (MsgA) PUSCH in a 2-step RACH process or on a configured grant (configured grant) scheduled PUSCH resource configured in an RRC inactive (RRC inactive) state. The small data transmission in the 2-step RACH process and the 4-step RACH process is referred to as RACH based (RACH based) small data transmission, which may also be referred to as RA-SDT; and small data transmission based on the configured grant scheduled PUSCH is referred to as CG based (configured grant based) small data transmission, which may also be referred to as CG-SDT.

In some implementations, subsequent transmission (subsequent transmission) of the RA-SDT may be cell radio network temporary identifier (Cell Radio Network Temporary Identifier, C-RNTI) scheduling transmission after contention resolution (Contention Resolution, CR).

In some implementations, after a downlink acknowledgement (Downlink Acknowledgement, DL ACK) corresponding to a CG sent by using a common control channel (Common Control Channel, CCCH) message is received, subsequent transmission is subsequent transmission of the CG-SDT. In this case, the subsequent transmission may be a CG, may be a dynamic grant (Dynamic Grant, DG), or may be a dynamic downlink assignment (dynamic DL assignment).

In some implementations, the terminal may perform one or more of the following operations on an initial downlink BWP (initial DL BWP) of a cell: receiving of a synchronization signal block, uplink sending of a random access process (on a corresponding initial uplink BWP), downlink receiving, and receiving of system information and paging information; and perform radio resource management (Radio resource management, RRM) measurement and cell reselection determining based on a cell defining synchronization signal block (cell defining SSB, CD-SSB) on the initial downlink BWP.

In some implementations, a separate initial DL BWP is configured for some terminals (for example, some types of terminals such as reduced capability (reduced capability, redcap) UE). The terminal may perform the foregoing sending and receiving behaviors on the separate BWP. The separate BWP and the initial downlink BWP may be completely staggered, partially overlapped, or have an inclusion relationship in frequency domain. Because the terminal needs to obtain operations such as downlink synchronization, measurement, and automatic gain control (Automatic Gain Control, AGC) based on an SSB, if the separate initial DL BWP includes no SSB, the terminal may need to frequently perform radio frequency retuning (RF retuning), that is, need to frequently return from the separate initial DL BWP to a bandwidth of the initial downlink BWP to perform SSB receiving. Consequently, power consumption of the terminal increases, a service interruption probability increases, system performance decreases, and so on. Therefore, including one SSB on the separate initial DL BWP can reduce power consumption of sending and receiving performed by the terminal on the BWP. The SSB may be usually an NCD-SSB. In other words, the SSB does not include an indication of a system information receiving configuration.

In some implementations, the terminal may determine a location and a frequency of the SSB on the separate initial DL BWP based on system information on the initial downlink BWP or higher layer signaling, and configure the terminal to perform RRM measurement at the frequency of the SSB. The measurement may be intra-frequency (intra-frequency) measurement, and may include measurement of a serving cell and measurement of an intra-frequency neighboring cell. Whether neighboring cell measurement is to be enabled or whether neighboring cell reselection is to be performed at the frequency is determined based on a measurement result.

In some implementations, before performing intra-frequency measurement and inter-frequency measurement, the terminal first measures the serving cell. When a measurement result of the serving cell is higher than a threshold, the terminal may not perform intra-frequency measurement or inter-frequency measurement. The measurement result may include reference signal received power (Reference Signal Received Power, RSRP) or reference signal received quality (Reference Signal Received Quality, RSRQ).

It should be noted that all the foregoing described implementations are used as examples to describe the methods provided in the embodiments of this application, and impose no specific limitation on the methods provided in the embodiments of this application.

With reference to the accompanying drawings, the following describes in detail a BWP switching processing method and apparatus, a configuration sending method and apparatus, and a device provided in the embodiments of this application by using some embodiments and application scenarios thereof.

FIG. 2 is a flowchart of a BWP switching processing method according to an embodiment of this application. As shown in FIG. 2, the method includes the following steps.

Step 201: A terminal obtains a target configuration, where the target configuration is a configuration of at least one of a target operation and a BWP.

The target configuration may be a configuration that is sent by a network side or another terminal and that is received by the terminal, or a configuration that is independently obtained by the terminal.

That the target configuration is the configuration of the at least one of the target operation and the BWP may be understood as any one of the following:
the target configuration includes a configuration of the target operation;
the target configuration includes a configuration of the BWP; and
the target configuration includes the configuration of the target operation and the configuration of the BWP.

In some implementations, the configuration of the target operation may be a per-BWP configuration (a BWP specific configuration or a per-BWP configuration), a per-UE configuration (a UE specific configuration or a per-UE configuration), or a per-cell configuration (a cell specific configuration or a per-UE configuration). In a case that the configuration of the target operation is a per-UE configuration or a per-cell configuration, the configuration of the target operation may be applicable to all BWPs corresponding to the cell.

The target operation includes at least one of the following:

SDT, paging monitoring, PEI monitoring, WUS monitoring, random access, and system information receiving.

Step 202: The terminal performs at least one of the target operation and BWP switching based on the target configuration in a case that a preset condition corresponding to the target operation or a second BWP is met, where the BWP switching includes switching from a first BWP to the second BWP.

In a case that the target operation and the BWP switching are to be performed, the target operation is preferentially performed, and then the BWP switching is performed; or the BWP switching is preferentially performed, and then the target operation is performed.

In some implementations, the performing the at least one of the target operation and the BWP switching includes: The BWP switching is preferentially performed, and the target operation may not be performed, for example, because a condition for performing the target operation is not met; or includes: The target operation is preferentially performed, and the BWP switching may not be performed, for example, because a condition for performing the BWP switching is not met.

In some implementations, the performing the at least one of the target operation and the BWP switching includes: The BWP switching is preferentially performed, and the target operation is performed if a condition for performing the target operation is met; or includes: The target operation is preferentially performed, and the BWP switching is performed if a BWP switching condition is met.

In some implementations, that the BWP switching is preferentially performed includes: The BWP switching is preferentially performed in the case that the condition for performing the BWP switching is met. Alternatively, that the target operation is preferentially performed includes: The target operation is preferentially performed in the case that the condition for performing the target operation is met.

The target operation includes at least one of the following:
small data transmission SDT initiation, paging monitoring, PEI monitoring, wake-up signal WUS monitoring, random access, and system information receiving.

That the terminal performs the at least one of the target operation and the BWP switching based on the target configuration in the case that the preset condition corresponding to the target operation or the second BWP is met may be: performing the at least one of the target operation and the BWP switching in the case that the terminal determines, based on the target configuration, that the preset condition corresponding to the target operation or the second BWP is met.

The preset condition may include at least one of the following:
a preset condition corresponding to the target operation, and a preset condition corresponding to the second BWP.

In some implementations, the preset condition may be agreed upon in a protocol, configured on the network side, or independently determined by the terminal.

The performing the at least one of the target operation and the BWP switching may be understood as at least one of the following:
performing the target operation, and not performing the BWP switching;
performing the BWP switching, and not performing the target operation; and
performing the target operation and the BWP switching.

An example in which the target operation is SDT is taken. The terminal receives the target configuration. If the terminal determines, based on the target configuration, that a condition corresponding to the SDT is met, the terminal performs one of the following operations:
switching to the second BWP (for example, a separate initial BWP), and initiating the SDT if SDT is configured on the second BWP; and
initiating the SDT on the first BWP (for example, an initial BWP) if the second BWP (for example, the separate initial BWP) is configured and no SDT is configured on the second BWP.

In addition, an execution sequence of the target operation and the BWP switching may be determined upon in a protocol, configured on the network side, or independently determined by the terminal.

The SDT initiation may also be referred to as performing the SDT.

In this embodiment of this application, by performing the foregoing steps, the at least one of the target operation and the BWP switching can be performed for a BWP switching scenario, to support processing on the target operation and the BWP switching, thereby improving transmission performance of the terminal.

For example, the terminal preferentially switches from the first BWP to the second BWP, and then performs the target operation. This brings an advantage that the target operation (for example, the SDT) is performed while a load offloading (offload) requirement of a system is met, to improve transmission performance of the terminal. For example, through the BWP switching performed by the terminal, a case that all terminals perform the SDT on the first BWP, and consequently, resources are insufficient or a conflict or congestion occurs can be avoided. After a switch to the second BWP, a part of system load can be offloaded.

For another example, the terminal performs the target operation, and then switches from the first BWP to the second BWP. This brings an advantage that an offloading requirement of a system is met as much as possible while the target operation (for example, the SDT) is met, to improve transmission performance of the terminal.

For another example, after switching from the first BWP to the second BWP, the terminal does not perform the target operation (for example, the SDT). In this way, a load offloading (offload) requirement of a system can be met, to improve transmission performance of the terminal. Alternatively, after the terminal performs the target operation (for example, the SDT), the terminal does not switch from the first BWP to the second BWP. In this way, transmission performance of the terminal can be improved, and a case that the target operation cannot be performed after a switch from the first BWP to the second BWP is avoided.

In an optional implementation, the target configuration includes at least one of the following:
the configuration of the target operation; and
a configuration of the second BWP.

The target configuration may be configured for the terminal by using an RRC message. For example, a parameter of the following SDT is configured for an SDT process through RRC.

The configuration of the target operation is used to configure at least one of the following:
a data volume threshold used to determine whether to initiate the SDT;
an RSRP threshold used to determine whether to initiate the SDT;
an RSRP threshold selected and configured for a synchronization signal block SSB of CG-SDT;
an RSRP threshold selected and configured for a RACH resource of random access RA-SDT;
an RSRP threshold selected and configured for an uplink carrier of the RA-SDT;
paging search space (Paging search space);
a control resource set (Control resource set, CORESET);
random access channel RACH search space;
the RACH resource;
system information search space; and
common search space.

For example, for the SDT, the target configuration may include at least one of the following:
a data volume threshold used to determine whether to initiate the SDT;
a reference signal received power RSRP threshold used to determine whether to initiate the SDT;
an RSRP threshold selected and configured for a synchronization signal block SSB of configured grant CG-SDT;
an RSRP threshold selected and configured for a RACH resource of random access RA-SDT; and
an RSRP threshold selected and configured for an uplink carrier of the RA-SDT.

In addition, a configuration of the SDT may be a per-BWP configuration (a per-BWP configuration). For example, whether a configuration for configuring the SDT exists on the first BWP and the second BWP.

In some implementations, for the paging (Paging) monitoring, the PEI monitoring, or the WUS monitoring, the target configuration may include at least one of the following: paging search space or CORESET.

In some implementations, for a RACH process, the target configuration may include RACH search space, CORESET, and a RACH resource.

In some implementations, in a system information (System Information, SI) receiving process, the target configuration may include at least one of the following: system information search space, common search space (common search space), or CORESET.

In some implementations, the configuration of the target operation includes at least one of the following:
a per-BWP configuration of the target operation;
a per-cell configuration that is of the target operation and that is configured for the first BWP or the second BWP; and
a per-terminal configuration that is of the target operation and that is configured for the first BWP or the second BWP.

A per-cell configuration may be applied to all BWPs. In other words, a configuration that is of the target operation and that is configured for the first BWP or the second BWP is applicable to all the BWP.

In this implementation, the configuration of the target operation may be flexibly configured in the foregoing manner.

In some implementations, the configuration of the second BWP may include configurations such as a period and an SSB index.

In some implementations, the configuration of the second BWP is used to configure at least one of the following:
an SDT type on the second BWP; and
an SDT resource on the second BWP.

The SDT type may be RA-SDT or CG-SDT.

The SDT resource may be an RA-SDT resource or a CG-SDT resource.

In this implementation, because the SDT type or the SDT resource is configured, the terminal may perform corresponding SDT based on these configurations, to improve transmission performance of the terminal.

In an optional implementation, that the preset condition corresponding to the target operation or the second BWP is met includes at least one of the following:
an execution condition of the target operation is met;
an execution condition of the BWP switching is met;
the second BWP is configured;
the configuration of the target operation is configured on the second BWP;
the configuration of the target operation is configured on the first BWP;
the configuration of the target operation is applicable to the second BWP;
the configuration of the target operation is applicable to the first BWP;
the target operation is configured on the first BWP;
the target operation is configured on the second BWP;
the target operation is applicable to the first BWP;
the target operation is applicable to the second BWP;
a type of the target operation configured on the first BWP is a preset type;
a type of the target operation configured on the second BWP is a preset type;
a resource of the target operation configured on the first BWP is a preset resource;
a resource of the target operation configured on the second BWP is a preset resource;
a type of the target operation applicable to the first BWP is a preset type;
a type of the target operation applicable to the second BWP is a preset type;
a resource of the target operation applicable to the first BWP is a preset resource; and
a resource of the target operation applicable to the second BWP is a preset resource.

The execution condition of the target operation may be an execution condition of at least one of SDT, paging monitoring, PEI monitoring, wake-up signal WUS monitoring, random access, and system information receiving that are defined in a protocol.

The execution condition of the BWP switching may be a BWP switching condition defined in a protocol.

The preset type of the target operation may be at least one of the following:
RA-SDT or CG-SDT.

That the resource of the target operation is the preset resource may be at least one of the following:
an RA-SDT resource or a CG-SDT resource.

In this implementation, at least one of the target operation and the BWP switching may be flexibly triggered based on the preset condition, to improve transmission performance of the terminal.

In an optional implementation, the first BWP includes at least one of the following:
an initial BWP, a BWP configured with a cell defining CD-SSB (cell defining SSB, CD-SSB), a BWP including CORESET#0, and a BWP for performing a first operation, where the first operation includes at least one of the following:
system information receiving, paging monitoring (paging monitoring), PEI monitoring, SSB receiving, random access, CD-SSB measurement, cell selection, cell reselection, camping, and SDT.

The BWP configured with the CD-SSB may be a BWP including the CD-SSB.

The CORESET#0 is CORESET#0 defined in a protocol.

The random access may be initiating a RACH.

In some implementations, the SDT in this embodiment of this application may include at least one of the following:
random access RA-SDT, subsequent transmission of the RA-SDT, configured grant CG-SDT, subsequent transmission of the CG-SDT.

In this implementation, a plurality of types of BWP switching may be supported, and a corresponding target operation is performed, to improve transmission performance of the terminal.

In an optional implementation, the second BWP includes at least one of the following:
a separate initial BWP (Separate initial BWP), a RedCap-specific initial BWP, a BWP configured with a non-cell defining (Non-cell defining SSB, NCD-SSB), a BWP including no CORESET#0, a BWP configured with no CD-SSB, a non-initial BWP, another inter-band BWP (another inter-band BWP), another intra-band BWP (another intra-band BWP), another inter-frequency BWP (another inter-frequency BWP), another intra-frequency BWP (another intra-frequency BWP), and a BWP for performing a second operation, where the second operation includes at least one of the following:
NCD-SSB receiving, NCD-SSB measurement, cell selection, cell reselection, camping, and SDT.

In this implementation, switching between a plurality of BWPs may be supported, and a corresponding target operation is performed, to improve transmission performance of the terminal.

Optionally, in a case that the second BWP includes the separate initial BWP, SDT is configured on the separate initial BWP or SDT is applicable to the separate initial BWP; or
in a case that the target configuration indicates that the second BWP includes the separate initial BWP, and no SDT is configured on the separate initial BWP or no SDT is applicable to the separate initial BWP, the terminal determines that the target configuration is invalid; or
in a case that the second BWP includes the separate initial BWP, and no SDT is configured on the separate initial BWP or no SDT is applicable to the separate initial BWP, the terminal performs one of the following:
   determining that SDT configured on the initial BWP or SDT applicable to the initial BWP is also applicable to the separate initial BWP; and
   determining that SDT on the separate initial BWP or SDT applicable to the initial BWP is consistent with the SDT configured on the initial BWP or the SDT applicable to the initial BWP.

In the case that the second BWP includes the separate initial BWP, SDT is configured on the separate initial BWP or SDT is applicable to the separate initial BWP. In this way, the terminal may perform SDT on the separate initial BWP, to improve transmission performance of the terminal.

After the terminal determines that the target configuration is invalid, the terminal may end a procedure, or does not perform the target operation, or does not perform the BWP switching.

It should be noted that in the case that the target configuration indicates that the second BWP includes the separate initial BWP, and no SDT is configured on the separate initial BWP or no SDT is applicable to the separate initial BWP, the terminal may also determine that the first configuration is valid, and perform at least one of the target operation and BWP switching.

The at least one of the foregoing is performed in a case that the second BWP includes the separate initial BWP, and no SDT is configured on the separate initial BWP or no SDT is applicable to the separate initial BWP, so that the terminal can perform the SDT on the separate initial BWP in the case that no SDT is configured on the separate initial BWP or no SDT is applicable to the separate initial BWP, to improve transmission performance of the terminal.

It should be noted that in this embodiment of this application, SDT or an SDT configuration configured on a BWP may be understood as SDT or an SDT configuration applicable to the BWP. For example, SDT or an SDT configuration configured on the first BWP may be understood as SDT or an SDT configuration applicable to the first BWP, and SDT or an SDT configuration configured on the second BWP may be understood as SDT or an SDT configuration applicable to the second BWP.

In an optional implementation, a priority of the BWP switching is higher than a priority of the target operation; or
a priority of the target operation is higher than a priority of the BWP switching; or
a network side configures preferentially performing the BWP switching; or
a network side configures preferentially performing the target operation.

In this implementation, an implementation may be as follows:
Solution 1: A priority of switching from the first BWP to the second BWP by the terminal is higher than a priority of initiating the SDT by the terminal. This brings an advantage that the SDT is performed while the load offloading (offload) requirement of the system is met.
Solution 2: A priority of initiating the SDT by the terminal is higher than a priority of switching from the first BWP to the second BWP. This brings an advantage that the offloading requirement of the system is met as much as possible while the SDT is ensured.
Solution 3: The network side configures whether the terminal preferentially performs the BWP switching or preferentially performs the SDT. This brings an advantage that the network side flexibly configures priorities of BWP switching and SDT in different scenarios, to improve flexibility.

In an optional implementation, in a case that the target operation includes the RA-SDT, the BWP switching is preferentially performed, and then the RA-SDT is performed; or
in a case that the target operation includes the CG-SDT, the CG-SDT is preferentially performed, and then the BWP switching is performed; or
in a case that the target operation includes the RA-SDT, the RA-SDT is preferentially performed, and then the BWP switching is performed; or
in a case that the target operation includes the CG-SDT, the BWP switching is preferentially performed, and then the CG-SDT is performed.

In this implementation, an implementation may be as follows:
For the RA-SDT, the BWP switching takes precedence over the SDT; and for the CG-SDT, the SDT takes precedence over the BWP switching. This brings an advantage that for a random access process, the SDT is performed while the offloading requirement of the system is met.

For the RA-SDT, the SDT takes precedence over BWP switching; and for the CG-SDT, the BWP switching takes precedence over the SDT. This brings an advantage that for a configured grant (Configured grant), the SDT is performed while the offloading requirement of the system is met.

In an optional implementation, the performing at least one of the target operation and BWP switching includes:
performing the BWP switching in a case that a BWP switching condition is met, and then performing the target operation if the second BWP meets the execution condition of the target operation; or
performing the target operation in a case that the execution condition of the target operation is met, and then performing the BWP switching if the BWP switching condition is met.

The BWP switching condition includes one of the following:
the second BWP is configured, an SDT resource exists on the second BWP, and the SDT type on the second BWP is a preset type.

The execution condition of the target operation includes:
an SDT resource is configured.

The execution condition of the target operation may alternatively be a condition defined in a protocol. For example, a measurement result meets a threshold for performing the SDT. This is not limited.

The BWP switching condition and the execution condition of the target operation may be conditions defined in a protocol or conditions configured on the network side.

In some implementations, the preset condition corresponding to the target operation or the second BWP includes the BWP switching condition or the execution condition of the target operation.

The preset type may be the RA-SDT or the CG-SDT.

In this implementation, if the BWP switching is preferentially performed and then the SDT is performed, an implementation may be as follows:
the BWP switching is performed if the BWP switching condition is met; and
the SDT is performed on the second BWP if an SDT execution condition is met; or
the SDT is not performed when an SDT execution condition is not met.

If the SDT is preferentially performed, and then the BWP switching is performed, an implementation is as follows:
the SDT is performed if an SDT execution condition is met; and
the BWP switching is performed if the BWP switching condition is met; or
the BWP switching is not performed when the BWP switching condition is not met.

In this implementation, based on the BWP switching condition and the execution condition of the target operation, the target operation may be flexibly selected to be performed or not performed, or the BWP switching may be flexibly selected to be performed or not performed, which is more conducive to improving transmission performance of the terminal.

In an optional implementation, that the terminal performs the at least one of the target operation and the bandwidth part BWP switching based on the target configuration in the case that the preset condition corresponding to the target operation or the second BWP is met includes:
the terminal switches from the first BWP to the second BWP in a case that an SDT configuration is configured on the first BWP or SDT is applicable to the first BWP, and no SDT configuration is configured on the second BWP or no SDT is applicable to the second BWP; or
the terminal preferentially initiates the SDT, and then switches from the first BWP to the second BWP, in a case that an SDT configuration is configured on the first BWP or SDT is applicable to the first BWP, and no SDT configuration is configured on the second BWP or no SDT is applicable to the second BWP; or
the terminal initiates the SDT in a case that an SDT configuration is configured on the first BWP or SDT is applicable to the first BWP, and no SDT configuration is configured on the second BWP or no SDT is applicable to the second BWP.

In this implementation, the terminal may not initiate SDT after switching from the first BWP to the second BWP. In this way, it can be ensured that a system can perform offloading by using the second BWP.

The terminal preferentially initiates the SDT, and then switches from the first BWP to the second BWP; or the terminal does not perform the BWP switching after initiating the SDT, thereby avoiding a waste of SDT resources.

Optionally, the SDT initiation includes at least one of the following:
initiating the SDT based on the SDT configuration configured on the first BWP; and
initializing an SDT process, where the SDT configuration is applied when SDT resource selection or data transmission is performed.

The initializing an SDT process may be that the terminal does not initiate the SDT based on the SDT configuration configured on the first BWP. For example, when initiating the SDT, the terminal does not initiate the SDT based on an SDT configuration on any BWP; instead, initiates the SDT (initial SDT) process, and then during specific SDT resource selection or transmission, determines an SDT configuration on a specific BWP for application. In this way, the selected SDT configuration can be more matched with the initiated SDT, thereby improving transmission performance of the SDT.

Optionally, the method further includes:
stopping or interrupting the SDT in a case of switching to the second BWP.

In this implementation, in a case that no SDT configuration is configured on the second BWP, the SDT may be stopped or interrupted after a switch to the second BWP, to avoid an error in the SDT transmission.

Optionally, that the terminal switches from the first BWP to the second BWP in the case that an SDT configuration is configured on the first BWP or SDT is applicable to the first BWP, and no SDT configuration is configured on the second BWP or no SDT is applicable to the second BWP includes:
the terminal switches from the first BWP to the second BWP in a case that an SDT configuration is configured on the first BWP or SDT is applicable to the first BWP, no SDT configuration is configured on the second BWP or no SDT is applicable to the second BWP, and a first condition is met.

That the first condition is met includes at least one of the following:
SDT configured by the SDT configuration on the first BWP is RA-SDT;
an SDT resource configured by the SDT configuration on the first BWP is an RA-SDT resource;
the terminal determines that initiated or executed SDT is RA-SDT; and
for the RA-SDT, the network side configures preferentially performing the BWP switching; or
that the first condition is met includes at least one of the following:
   SDT configured by the SDT configuration on the first BWP is CG-SDT;
   an SDT resource configured by the SDT configuration on the first BWP is a CG-SDT resource;
   the terminal determines that initiated or executed SDT is CG-SDT; and
   for the CG-SDT, the network side configures preferentially performing the BWP switching.

In this implementation, an implementation may be that in the first condition, switching from the first BWP to the second BWP is performed, and the SDT is not initiated. In this way, it can be ensured that a system can perform offloading by using the second BWP.

Optionally, the SDT initiation is initiating the CG-SDT in a second condition, and the second condition includes at least one of the following:
SDT configured by the SDT configuration on the first BWP is CG-SDT;
an SDT resource configured by the SDT configuration on the first BWP is a CG-SDT resource;
the terminal determines that initiated or executed SDT is CG-SDT; and
for the CG-SDT, the network side configures preferentially initiating the SDT; or
the SDT initiation is initiating the RA-SDT in a second condition, and the second condition includes at least one of the following:
   SDT configured by the SDT configuration on the first BWP is RA-SDT;
   an SDT resource configured by the SDT configuration on the first BWP is an RA-SDT resource;
   the terminal determines that initiated or executed SDT is RA-SDT; and
   for the RA-SDT, the network side configures preferentially initiating the SDT.

In this implementation, the CG-SDT or the RA-SDT may be initiated in the second condition, to avoid a waste of SDT resources in a case that no SDT configuration is configured on the second BWP.

In an optional implementation, that the terminal performs the at least one of the target operation and the bandwidth part BWP switching based on the target configuration in the case that the preset condition corresponding to the target operation or the second BWP is met includes:
the terminal preferentially switches from the first BWP to the second BWP, and then initiates the SDT, in a case that an SDT configuration is configured on the first BWP or SDT is applicable to the first BWP, and an SDT configuration is configured on the second BWP or SDT is applicable to the second BWP; or
the terminal preferentially initiates the SDT, and then switches from the first BWP to the second BWP, in a case that an SDT configuration is configured on the first BWP or SDT is applicable to the first BWP, and an SDT configuration is configured on the second BWP or SDT is applicable to the second BWP.

In this implementation, an implementation may be that in a case that an SDT configuration is configured on the first BWP and the second BWP, or an SDT configuration is applicable to the first BWP and the second BWP, switching from the first BWP to the second BWP is preferentially performed, and then the SDT is initiated; or the SDT is preferentially initiated, and then switching from the first BWP to the second BWP is performed. In this way, not only the offloading requirement of the system can be ensured, but also transmission performance of the terminal can be improved.

Optionally, the SDT initiation includes at least one of the following:
initiating the SDT based on the SDT configuration configured on the second BWP; or
initializing an SDT process, where the SDT configuration is applied when SDT resource selection or data transmission is performed;
initiating the SDT based on the SDT configuration configured on the first BWP; and
initiating the SDT based on an SDT configuration configured on a current BWP.

The initializing an SDT process may be that the terminal does not initiate the SDT based on the SDT configuration configured on the first BWP and the second BWP. For example, when initiating the SDT, the terminal does not initiate the SDT based on an SDT configuration on any BWP; instead, initiates the SDT (initial SDT) process, and then during specific SDT resource selection or transmission, determines an SDT configuration on a specific BWP for application. In this way, the selected SDT configuration can be more matched with the initiated SDT, thereby improving transmission performance of the SDT.

In this implementation, the terminal may initiate the SDT based on SDT configurations on a plurality of BWPs, to improve flexibility of SDT transmission.

Optionally, that the terminal preferentially switches from the first BWP to the second BWP, and then initiates the SDT, in the case that an SDT configuration is configured on the first BWP or SDT is applicable to the first BWP, and an SDT configuration is configured on the second BWP or SDT is applicable to the second BWP includes:
the terminal preferentially switches from the first BWP to the second BWP, and then initiates the SDT, in a case that an SDT configuration is configured on the first BWP or SDT is applicable to the first BWP, an SDT configuration is configured on the second BWP or SDT is applicable to the second BWP, and a third condition is met.

That the third condition is met includes at least one of the following:
SDT configured by the SDT configuration on the first BWP is RA-SDT;
an SDT resource configured by the SDT configuration on the first BWP is an RA-SDT resource;
SDT configured by the SDT configuration on the second BWP is RA-SDT;
an SDT resource configured by the SDT configuration on the second BWP is an RA-SDT resource;
the terminal determines that initiated or executed SDT is RA-SDT; and
for the RA-SDT, the network side configures preferentially performing the BWP switching; or
that the third condition is met includes at least one of the following:
   SDT configured by the SDT configuration on the first BWP is CG-SDT;
   an SDT resource configured by the SDT configuration on the first BWP is a CG-SDT resource;
   SDT configured by the SDT configuration on the second BWP is CG-SDT;
   an SDT resource configured by the SDT configuration on the second BWP is a CG-SDT resource;
   the terminal determines that initiated or executed SDT is CG-SDT; and
   for the CG-SDT, the network side configures preferentially performing the BWP switching.

In this implementation, an implementation may be that in the third condition, switching from the first BWP to the second BWP is preferentially performed, and then the SDT is initiated. In this way, not only the offloading requirement of the system can be ensured, and transmission performance of the terminal can be improved.

Optionally, that the terminal preferentially initiates the SDT, and then switches from the first BWP to the second BWP, in the case that an SDT configuration is configured on the first BWP or SDT is applicable to the first BWP, and an SDT configuration is configured on the second BWP or SDT is applicable to the second BWP includes:
the terminal preferentially initiates the SDT, and then switches from the first BWP to the second BWP, in a case that an SDT configuration is configured on the first BWP or SDT is applicable to the first BWP, an SDT configuration is configured on the second BWP or SDT is applicable to the second BWP, and a fourth condition is met.

That the fourth condition is met includes at least one of the following:
SDT configured by the SDT configuration on the first BWP is CG-SDT;
an SDT resource configured by the SDT configuration on the first BWP is a CG-SDT resource;
SDT configured by the SDT configuration on the second BWP is CG-SDT;
an SDT resource configured by the SDT configuration on the second BWP is a CG-SDT resource;
the terminal determines that initiated or executed SDT is CG-SDT; and
for the CG-SDT, the network side configures preferentially initiating the SDT; or
that the fourth condition is met includes at least one of the following:
   SDT configured by the SDT configuration on the first BWP is RA-SDT;
   an SDT resource configured by the SDT configuration on the first BWP is an RA-SDT resource;
   SDT configured by the SDT configuration on the second BWP is RA-SDT;
   an SDT resource configured by the SDT configuration on the second BWP is an RA-SDT resource;
   the terminal determines that initiated or executed SDT is RA-SDT; and
   for the RA-SDT, the network side configures preferentially initiating the SDT.

In this implementation, an implementation may be that in the third condition, the SDT is preferentially initiated, and then switching from the first BWP to the second BWP is performed. In this way, not only transmission performance of the terminal can be improved, but also the offloading requirement of the system can be ensured.

Optionally, the method further includes:
after switching to the second BWP, the terminal performs SDT based on the SDT configuration configured on the second BWP.

In this implementation, an implementation may be that in a case that an SDT configuration is configured on the first BWP and the second BWP, or an SDT configuration is applicable to the first BWP and the second BWP, after switching to the second BWP, the terminal performs the SDT based on the SDT configuration configured on the second BWP. In this way, a configuration used for SDT transmission matches a current BWP, thereby improving transmission performance of the SDT.

In an optional implementation, that the terminal performs the at least one of the target operation and the BWP switching based on the target configuration in the case that the preset condition corresponding to the target operation or the second BWP is met includes:
the terminal preferentially switches from the first BWP to the second BWP, and then initiates the SDT, in a case that no SDT configuration is configured on the first BWP or no SDT is applicable to the first BWP, and an SDT configuration is configured on the second BWP or SDT is applicable to the second BWP; or
the terminal preferentially initiates the SDT, and then switches from the first BWP to the second BWP, in a case that no SDT configuration is configured on the first BWP or no SDT is applicable to the first BWP, and an SDT configuration is configured on the second BWP or SDT is applicable to the second BWP; or
the terminal switches from the first BWP to the second BWP in a case that no SDT configuration is configured on the first BWP or no SDT is applicable to the first BWP, and an SDT configuration is configured on the second BWP or SDT is applicable to the second BWP.

In this implementation, an implementation may be that in a case that no SDT configuration is configured on the first BWP and an SDT configuration is configured on the second BWP; or no SDT configuration is applicable to the first BWP, and an SDT configuration is applicable to the second BWP, switching from the first BWP to the second BWP is preferentially performed, and then the SDT is initiated; or the SDT is preferentially initiated, and then switching from the first BWP to the second BWP is performed. In this way, not only the offloading requirement of the system can be ensured, but also transmission performance of the terminal can be improved.

In addition, an implementation may be that in a case that no SDT configuration is configured on the first BWP and an SDT configuration is configured on the second BWP; or no SDT configuration is applicable to the first BWP, and an SDT configuration is applicable to the second BWP, the terminal switches from the first BWP to the second BWP, and does not initiate the SDT, to ensure the offloading requirement of the system. For example, if the terminal determines that no SDT configuration exists on the first BWP, the terminal does not initiate the SDT.

Optionally, the SDT initiation includes at least one of the following:
initiating the SDT based on the SDT configuration configured on the second BWP; or
initiating an initial SDT process, where an SDT configuration is selected for application when SDT resource selection or data transmission is performed; and
initiating the SDT based on an SDT configuration configured on a current BWP.

The initiating an initial SDT process may be that the terminal does not initiate the SDT based on the SDT configuration configured on the second BWP. For example, when initiating the SDT, the terminal does not initiate the SDT based on an SDT configuration on any BWP; instead, initiates the SDT (initial SDT) process, and then during specific SDT resource selection or transmission, determines an SDT configuration on a specific BWP for application. In this way, the selected SDT configuration can be more matched with the initiated SDT, thereby improving transmission performance of the SDT.

Optionally, the method further includes:
after switching to the second BWP, the terminal performs SDT based on the SDT configuration configured on the second BWP.

In this implementation, an implementation may be that in a case that no SDT configuration is configured on the first BWP and an SDT configuration is configured on the second BWP; or no SDT configuration is applicable to the first BWP and an SDT configuration is applicable to the second BWP, after switching to the second BWP, the terminal performs the SDT based on the SDT configuration configured on the second BWP. In this way, a configuration used for SDT transmission matches a current BWP, thereby improving transmission performance of the SDT.

Optionally, that the terminal preferentially switches from the first BWP to the second BWP, and then initiates the SDT, in the case that no SDT configuration is configured on the first BWP or no SDT is applicable to the first BWP, and an SDT configuration is configured on the second BWP or SDT is applicable to the second BWP includes:
the terminal preferentially switches from the first BWP to the second BWP, and then initiates the SDT, in a case that no SDT configuration is configured on the first BWP or no SDT is applicable to the first BWP, an SDT configuration is configured on the second BWP or SDT is applicable to the second BWP, and a fifth condition is met.

That the fifth condition is met includes at least one of the following:
SDT configured by the SDT configuration on the second BWP is RA-SDT;
an SDT resource configured by the SDT configuration on the second BWP is an RA-SDT resource;
the terminal determines that initiated or executed SDT is RA-SDT; and
for the RA-SDT, the network side configures preferentially performing the BWP switching; or
that the fifth condition is met includes at least one of the following:
   SDT configured by the SDT configuration on the second BWP is CG-SDT;
   an SDT resource configured by the SDT configuration on the second BWP is a CG-SDT resource;
   the terminal determines that initiated or executed SDT is CG-SDT; and
   for the CG-SDT, the network side configures preferentially performing the BWP switching.

In this implementation, an implementation may be that in the fifth condition, switching from the first BWP to the second BWP is performed, and the SDT is not initiated. In this way, it can be ensured that a system can perform offloading by using the second BWP.

Optionally, the terminal preferentially initiates the SDT, and then switches from the first BWP to the second BWP, in a case that no SDT configuration is configured on the first BWP or no SDT is applicable to the first BWP, and an SDT configuration is configured on the second BWP or SDT is applicable to the second BWP includes:
the terminal preferentially initiates the SDT, and then switches from the first BWP to the second BWP, in a case that no SDT configuration is configured on the first BWP or no SDT is applicable to the first BWP, an SDT configuration is configured on the second BWP or SDT is applicable to the second BWP, and a sixth condition is met.

That the sixth condition is met includes at least one of the following:
SDT configured by the SDT configuration on the second BWP is CG-SDT;
an SDT resource configured by the SDT configuration on the second BWP is a CG-SDT resource;
the terminal determines that initiated or executed SDT is CG-SDT; and
for the CG-SDT, the network side configures preferentially initiating the SDT; or
that the sixth condition is met includes at least one of the following:
   SDT configured by the SDT configuration on the second BWP is RA-SDT;
   an SDT resource configured by the SDT configuration on the second BWP is an RA-SDT resource;
   the terminal determines that initiated or executed SDT is RA-SDT; and
   for the RA-SDT, the network side configures preferentially initiating the SDT.

In this implementation, an implementation may be that in the sixth condition, the SDT is preferentially initiated, and then switching from the first BWP to the second BWP is performed. In this way, not only transmission performance of the terminal can be improved, but also the offloading requirement of the system can be ensured.

In an optional implementation, in a case that an SDT configuration of the target operation is a per-cell configuration, the SDT configuration is applied to all BWPs.

That the SDT configuration may be applied to all the BWPs may be that the SDT configuration is applied to all BWPs in the cell. In this way, because the SDT configuration is applied to all the BWPs, configuration overheads can be reduced.

In an optional implementation, in a case that the target operation includes performing the SDT at the initial BWP, performing the SDT on the separate initial BWP includes at least one of the following:
sending an uplink signal on an initial uplink BWP; and
monitoring a downlink signal on an initial downlink BWP.

The uplink signal may include at least one of the following:
a RACH preamble (preamble) and a RACH message 3 (msg.3).

The sending an uplink signal may also be sending the CG-SDT.

The downlink signal may include a physical downlink control channel (Physical downlink control channel, PDCCH).

In an example in which the second BWP is a separate initial BWP (separate initial BWP) or an initial BWP (initial BWP), the SDT is performed on the separate initial BWP (or the initial BWP), including at least one of the following:
sending the uplink signal such as the RACH preamble or RACH msg.3 on a separate initial UL BWP (or an initial UL BWP), and sending the CG-SDT; and
monitoring the downlink signal such as the PDCCH on a separate initial DL BWP (or an initial DL BWP).

In an optional implementation, the performing at least one of the target operation and BWP switching includes:
in a case that the terminal is configured with the SDT and the second BWP, preferentially performing the SDT, and then switching from the first BWP to the second BWP.

In this implementation, an implementation may be that in the case that the terminal is configured with the SDT and the second BWP, the terminal preferentially performs the SDT, and then switches from the first BWP to the second BWP. In this way, not only transmission performance of the terminal can be improved, but also the offloading requirement of the system can be ensured.

In the embodiments of this application, the terminal obtains the target configuration. The target configuration is the configuration of the at least one of the target operation and the bandwidth part BWP. The terminal performs the at least one of the target operation and the BWP switching based on the target configuration in the case that the preset condition corresponding to the target operation or the second BWP is met. The BWP switching includes switching from the first BWP to the second BWP. In the case that the target operation and the BWP switching are to be performed, the target operation is preferentially performed, and then the BWP switching is performed; or the BWP switching is preferentially performed, and then the target operation is performed; and the target operation includes at least one of the following: small data transmission SDT initiation, paging monitoring, PEI monitoring, wake-up signal WUS monitoring, random access, and system information receiving. In this way, the at least one of the target operation and the BWP switching can be performed for a BWP switching scenario, to support processing on the target operation and the BWP switching, thereby improving transmission performance of the terminal.

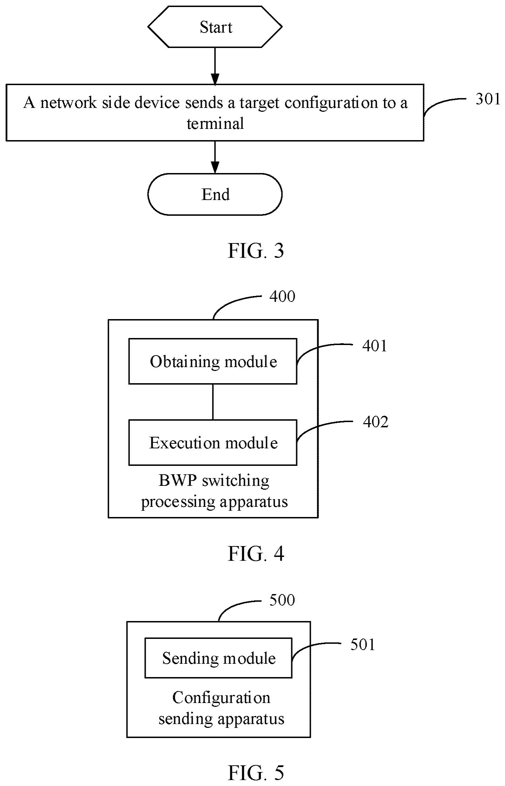

FIG. 3 is a flowchart of a configuration sending method according to an embodiment of this application. As shown in FIG. 3, the method includes the following steps.

Step 301: A network side device sends a target configuration to a terminal, where the target configuration is a configuration of at least one of a target operation and a bandwidth part BWP.

The target configuration is used to perform, by the terminal, at least one of the target operation and BWP switching based on the target configuration in a case that a preset condition corresponding to the target operation or a second BWP is met. The BWP switching includes switching from a first BWP to the second BWP.

In a case that the target operation and the BWP switching are to be performed, the target operation is preferentially performed, and then the BWP switching is performed; or the BWP switching is preferentially performed, and then the target operation is performed.

The target operation includes at least one of the following:
small data transmission SDT initiation, paging monitoring, PEI monitoring, wake-up signal WUS monitoring, random access, and system information receiving.

Optionally, the target configuration includes at least one of the following:
a configuration of the target operation; and
a configuration of the second BWP.

Optionally, the configuration of the target operation is used to configure at least one of the following:
a data volume threshold used to determine whether to initiate SDT;
a reference signal received power RSRP threshold used to determine whether to initiate the SDT;
an RSRP threshold selected and configured for a synchronization signal block SSB of configured grant CG-SDT;
an RSRP threshold selected and configured for a RACH resource of random access RA-SDT;
an RSRP threshold selected and configured for an uplink carrier of the RA-SDT;
paging search space;
CORESET;
random access channel RACH search space;
the RACH resource;
system information search space; and
common search space.

Optionally, the configuration of the target operation includes at least one of the following:
a per-BWP configuration of the target operation;
a per-cell configuration of the target operation and that is configured for the first BWP or the second BWP; and
a per-terminal configuration that is of the target operation and that is configured for the first BWP or the second BWP.

Optionally, the configuration of the second BWP is used to configure at least one of the following:
an SDT type on the second BWP; and
an SDT resource on the second BWP.

It should be noted that this embodiment is used as an implementation of the network side device corresponding to the embodiment shown in FIG. 2. For a specific implementation thereof, references may be made to related descriptions of the embodiment shown in FIG. 2. To avoid repetition, details are not described in this embodiment.

The following uses a plurality of embodiments to illustrate the method provided in embodiments of this application.

### Embodiment 1

This embodiment mainly describes a plurality of technical solutions supported by the embodiments of this application, and this embodiment may be described in more detail in Embodiment 2, Embodiment 3, and Embodiment 4.

For a terminal in an idle state and a terminal in an inactive state, if both SDT and a separate initial BWP are configured, there may be at least one of the following solutions about whether the terminal specifically preferentially initiates SDT or preferentially performs BWP switching:
Solution 1: A priority of switching from a first BWP to a second BWP by the terminal is higher than a priority of initiating the SDT by the terminal. This brings an advantage that the SDT is performed while a load offloading (offload) requirement of a system is met.
Solution 2: A priority of initiating the SDT by the terminal is higher than a priority of switching from a first BWP to a second BWP. This brings an advantage that an offloading requirement of a system is met as much as possible while the SDT is ensured.
Solution 3: A network side configures whether the terminal preferentially performs the BWP switching or preferentially performs the SDT. This brings an advantage that the network side flexibly configures priorities of BWP switching and SDT in different scenarios, to improve flexibility.
Solution 4.1: For RA-SDT, BWP switching takes precedence over SDT; and for CG-SDT, SDT takes precedence over BWP switching. This brings an advantage that for a random access process, the SDT is performed while an offloading requirement of a system is met.
Solution 4.2: For RA-SDT, SDT takes precedence over BWP switching; and for CG-SDT, BWP switching takes precedence over SDT. This brings an advantage that for a configured grant, the SDT is performed while an offloading requirement of a system is met.
Solution 4.3: A network side configures Solution 4.1 and Solution 4.2.
Solution 5.1: If a network side configures a separate initial BWP and needs to configure SDT, the SDT needs to be configured on the separate initial BWP (whether the SDT is still configured on an initial BWP is not limited). That is, it is impossible that SDT is configured only on the initial BWP and no SDT is configured on the separate initial BWP. Specifically, a problem to be resolved in this patent is avoided from a configuration perspective.
Solution 5.2: If a network side configures a separate initial BWP and configures SDT on an initial BWP, no SDT is configured on the separate initial BWP. In this case, the terminal performs one of the following:
   the terminal assumes that the SDT on the initial BWP is also applicable to the separate initial BWP; and
   the terminal assumes that SDT on the separate initial BWP is consistent with the SDT configured on the initial BWP.

That is, it is impossible that SDT is configured only on the initial BWP and no SDT is configured on the separate initial BWP. Specifically, a problem to be resolved in this patent is avoided from a configuration perspective.

The SDT is performed on the separate initial BWP (or the initial BWP), including at least one of the following:
sending an uplink signal such as a RACH preamble or RACH msg.3 on a separate initial UL BWP (or an initial UL BWP), and sending CG-SDT; and
monitoring a downlink signal such as a PDCCH on a separate initial DL BWP (or an initial DL BWP).

An SDT configuration includes at least one of the following:
sdt DataVolumeThreshold: a data volume threshold used by UE to determine whether to perform an SDT process;
sdt RSRP threshold: an RSRP threshold used by the UE to determine whether to perform the SDT process; and
cg SDT RSRP threshold SSB: an RSRP threshold selected and configured for an SSB of CG-SDT.

In addition, the foregoing parameters are configured for the SDT process through RRC.

Specifically, the SDT configuration is a per-BWP configuration.

The first BWP includes at least one of the following:
an initial BWP, namely, a legacy initial BWP;
a BWP including a CD-SSB;
a BWP including CORESET#0; and
a BWP for performing the following operations.

The second BWP includes at least one of the following:
a separate initial BWP;
a BWP including an NCD-SSB;
a BWP including no CORESET#0;
a BWP including no CD-SSB;
a BWP other than an initial BWP;
another inter-band BWP;
another intra-band BWP;
another inter-frequency BWP;
another intra-frequency BWP; and
a BWP for performing the following operations.

Further, the terminal performs at least one of the following operations on the first BWP:
SI receiving;
paging monitoring;
PEI monitoring;
SSB receiving;
a RACH;
CD-SSB measurement;
cell selection or reselection;
camping; and
SDT, including RA-SDT, CG-SDT, subsequent transmission of the RA-SDT, and subsequent transmission of the CG-SDT.

Further, the terminal performs at least one of the following operations on the second BWP:
NCD-SSB receiving;
a RACH;
NCD-SSB measurement;
cell selection or reselection;
camping; and
SDT, including RA-SDT, CG-SDT, subsequent transmission of the RA-SDT, and subsequent transmission of the CG-SDT.

Further, the SDT may be extended to the following other processes:
1. a paging, PEI, or WUS monitoring process, corresponding to the SDT configuration, where a paging configuration includes at least one of the following: paging search space and CORESET;
2. a RACH process, corresponding to the SDT configuration, where a RACH configuration includes at least one of the following: RACH search space, CORESET, and a RACH resource; and
3. an SI receiving process, corresponding to the SDT configuration, where an SI configuration includes at least one of the following: SI search space, common search space, and CORESET.

It should be noted that the SDT is mainly taken for description in this embodiment of this application. In this embodiment of this application, all implementations of the SDT may be applied to the paging, PEI, or WUS monitoring process, the RACH process, and the SI receiving process. Details are not described in this embodiment of this application.

In some implementations, the terminal receives a target configuration, and the terminal performs one of the following operations based on the target configuration if a condition corresponding to the SDT is met:
switching to the separate initial BWP, and initiating the SDT if SDT is configured on the separate initial BWP; and
initiating the SDT on the initial BWP if the separate initial BWP is configured and no SDT is configured on the separate initial BWP.

The target configuration includes:
an SDT configuration and a second BWP configuration.

### Embodiment 2

This embodiment may be described by taking Scenario 1 as an example. Scenario 1: An SDT configuration is configured on a first BWP, and no SDT configuration is configured on a second BWP. Details are as follows:
For Scenario 1, there may be the following solutions:
Solution 1: If a terminal is configured with the second BWP, the terminal switches to the second BWP.

Further, because no SDT configuration is configured on the second BWP, the terminal cannot initiate SDT.

Solution 2: A terminal initiates SDT.

Further, if the terminal is configured with the second BWP, the terminal switches to the second BWP. Alternatively, further, if the terminal is configured with the second BWP and no SDT is configured on the second BWP, the terminal does not switch to the second BWP.

There is a sequence between initiating the SDT and switching to the second BWP.

Further, the terminal initiates the SDT. Specifically, if SDT is configured on the first BWP and/or the second BWP, the terminal initiates the SDT. At least one of the following is specifically included:
1. The terminal does not initiate the SDT based on the SDT configuration configured on the first BWP.

Specifically, during initiation of the SDT, the SDT is not initiated based on the SDT configuration on any BWP, and an initial SDT process is first performed.

Then, during specific SDT resource selection or transmission, an SDT configuration on a specific BWP for application is determined.

Further, that the terminal switches to the second BWP further includes: stopping or interrupting the SDT process, because no SDT configuration exists on the second BWP.

2. The terminal initiates the SDT based on the SDT configuration configured on the first BWP.

Further, that the terminal switches to the second BWP further includes: stopping or interrupting the SDT process, because no SDT configuration exists on the second BWP.

3. The terminal does not initiate the SDT.

Specifically, if the terminal determines that no SDT configuration exists on the second BWP, the terminal does not initiate the SDT.

Solution 3: The terminal receives a network indication. The network indication is used to indicate the terminal to preferentially perform BWP switching or preferentially initiate the SDT.

If a network indicates the terminal to preferentially perform BWP switching, Solution 1 is performed: Specifically, if the terminal is configured with the second BWP, the terminal switches to the second BWP.

If a network indicates the terminal to preferentially initiate the SDT, Solution 2 is performed: Specifically, the terminal initiates the SDT. Further, if the terminal is configured with the second BWP and no SDT is configured on the second BWP, the terminal does not switch to the second BWP.

Solution 4.1: For RA-SDT, Solution 1 is performed:
Specifically, if at least one of the following conditions is met:
1. configured SDT is RA-SDT;
2. a configured SDT resource is an RA-SDT resource; and
3. the terminal determines that initiated or executed SDT is RA-SDT; and
if the terminal is configured with the second BWP, the terminal switches to the second BWP.

For CG-SDT, Solution 2 is performed:
Specifically, if at least one of the following conditions is met:
1. configured SDT is CG-SDT;
2. a configured SDT resource is a CG-SDT resource; and
3. the terminal determines that initiated or executed SDT is CG-SDT,
the terminal initiates the SDT.

Solution 4.2: For RA-SDT, Solution 2 is performed:
Specifically, if at least one of the following conditions is met:
1. configured SDT is RA-SDT;
2. a configured SDT resource is an RA-SDT resource; and
3. the terminal determines that initiated or executed SDT is RA-SDT,
the terminal initiates the SDT.

For CG-SDT, Solution 1 is performed:
Specifically, if at least one of the following conditions is met:
1. configured SDT is CG-SDT;
2. a configured SDT resource is a CG-SDT resource; and
3. the terminal determines that initiated or executed SDT is CG-SDT; and
if the terminal is configured with the second BWP, the terminal switches to the second BWP.

Solution 4.3: The terminal receives a network indication. The network indication is used to indicate the terminal to perform at least one of the following:
1. for RA-SDT, preferentially performing BWP switching, or preferentially performing SDT; and
2. for CG-SDT, preferentially performing BWP switching, or preferentially performing SDT

Solution 4.1 or Solution 4.2 is selected based on the network indication.

Specifically, if at least one of the following is indicated:
1. for RA-SDT, the terminal preferentially performs BWP switching; and
2. for CG-SDT, the terminal preferentially initiates SDT,
one of the following is performed:
1. for RA-SDT, Solution 1 is performed: Specifically, if the terminal is configured with the second BWP, the terminal switches to the second BWP; and
2. for CG-SDT, Solution 2 is performed: Specifically, the terminal initiates SDT.

Specifically, if at least one of the following is indicated:
1. for RA-SDT, the terminal preferentially initiates SDT; and
2. for CG-SDT, the terminal preferentially performs BWP switching,
one of the following is performed:
1. for RA-SDT, Solution 2 is performed: Specifically, the terminal initiates SDT; and
2. for CG-SDT, Solution 1 is performed: Specifically, if the terminal is configured with the second BWP, the terminal switches to the second BWP.

### Solution 5.1:

If the terminal receives a configuration, an SDT configuration is configured on the first BWP, and no SDT configuration is configured on the second BWP, the configuration is considered as an invalid configuration.

Solution 5.2: If a network side configures a separate initial BWP and configures SDT on an initial BWP, no SDT is configured on the separate initial BWP. In this case, the terminal performs one of the following:
1. the terminal assumes that the SDT on the initial BWP is also applicable to the separate initial BWP; and
2. the terminal assumes that SDT on the separate initial BWP is consistent with the SDT configured on the initial BWP.

Further, the terminal initiates SDT or switches BWPs by using Solution 1 to Solution 4.

### Embodiment 3

This embodiment is described by taking Scenario 2 as an example. Scenario 2: An SDT configuration is configured on a first BWP, and an SDT configuration is configured on a second BWP.

For Scenario 2, the following solutions may exist:
Solution 1: If a terminal is configured with the second BWP, the terminal switches to the second BWP.

Further, the terminal initiates SDT based on the SDT configuration configured on the second BWP.

It is noted that a difference between this solution and Solution 2 is as follows: The terminal switches to the second BWP, and then initiates the SDT.

Solution 2: The terminal initiates SDT.

If the terminal is configured with the second BWP, the terminal switches to the second BWP.

It is noted that a difference between this solution and Solution 1 is as follows: The terminal initiates the SDT, and then switches to the second BWP.

Further, the terminal performs the SDT based on the SDT configuration configured on the second BWP.

Further, the terminal initiates the SDT. Specifically, if SDT is configured on the first BWP and/or the second BWP, the terminal initiates the SDT. At least one of the following is specifically included:
1. The terminal does not initiate SDT based on the SDT configuration configured on the first BWP and the SDT configuration configured on the second BWP.

Specifically, during initiation of the SDT, the SDT is not initiated based on the SDT configuration on any BWP, and an initial SDT process is first performed. Then, during specific SDT resource selection or transmission, an SDT configuration on a specific BWP for application is determined.

Further, after switching to the second BWP, the terminal performs the SDT based on the configuration on the second BWP.

2. The terminal initiates the SDT based on the SDT configuration configured on the second BWP, and because the terminal subsequently switches to the second BWP, the terminal initiates the SDT based on the SDT configuration on the second BWP.

Further, the terminal performs the SDT based on the configuration on the second BWP.

3. The terminal initiates the SDT based on the SDT configuration configured on the first BWP.

Further, after switching to the second BWP, the terminal performs the SDT based on the configuration on the second BWP.

4. The terminal initiates the SDT based on an SDT configuration configured on a current BWP.

Specifically, the current BWP means that the terminal initiates the SDT based on an SDT configuration on a specific BWP on which the terminal is located.

Further, the terminal performs the SDT based on the configuration on the second BWP.

Solution 3: The terminal receives a network indication. The network indication is used to indicate the terminal to preferentially perform BWP switching or preferentially initiate the SDT.

If a network indicates the terminal to preferentially perform BWP switching, Solution 1 is performed: Specifically, if the terminal is configured with the second BWP, the terminal switches to the second BWP.

If a network indicates the terminal to preferentially initiate the SDT, Solution 2 is performed: Specifically, the terminal initiates the SDT. Further, if the second BWP is configured and SDT is configured on the second BWP, the BWP is switched to the second BWP.

Solution 4.1: For RA-SDT, Solution 1 is performed:
Specifically, if at least one of the following conditions is met:
1. configured SDT is RA-SDT;
2. a configured SDT resource is an RA-SDT resource; and
3. the terminal determines that initiated or executed SDT is RA-SDT, and
if the terminal is configured with the second BWP, the terminal switches to the second BWP.

For CG-SDT, Solution 2 is performed:
Specifically, if at least one of the following conditions is met:
1. configured SDT is CG-SDT;
2. a configured SDT resource is a CG-SDT resource; and
3. the terminal determines that initiated or executed SDT is CG-SDT,
the terminal initiates the SDT. Further, if the second BWP is configured and SDT is configured on the second BWP, the BWP is switched to the second BWP.

Solution 4.2: For RA-SDT, Solution 2 is performed:
Specifically, if at least one of the following conditions is met:
1. configured SDT is RA-SDT;
2. a configured SDT resource is an RA-SDT resource; and
3. the terminal determines that initiated or executed SDT is RA-SDT,
the terminal initiates the SDT. Further, if the second BWP is configured and SDT is configured on the second BWP, the BWP is switched to the second BWP.

For CG-SDT, Solution 1 is performed:
Specifically, if at least one of the following conditions is met:
1. configured SDT is CG-SDT;
2. a configured SDT resource is a CG-SDT resource; and
3. the terminal determines that initiated or executed SDT is CG-SDT, and
if the terminal is configured with the second BWP, the terminal switches to the second BWP.

Solution 4.3: The terminal receives a network indication. The network indication is used to indicate the terminal to perform at least one of the following:
1. for RA-SDT, preferentially performing BWP switching, or preferentially performing SDT; and
2. for CG-SDT, preferentially performing BWP switching, or preferentially performing SDT.

Solution 4.1 or Solution 4.2 is selected based on the network indication.

Specifically, if at least one of the following is indicated:
1. for RA-SDT, the terminal preferentially performs BWP switching; and
2. for CG-SDT, the terminal preferentially initiates SDT,
one of the following is performed:
1. for RA-SDT, Solution 1 is performed: Specifically, if the terminal is configured with the second BWP, the terminal switches to the second BWP; and
2. for CG-SDT, Solution 2 is performed: Specifically, the terminal initiates SDT.

Specifically, if at least one of the following is indicated:
1. for RA-SDT, the terminal preferentially initiates SDT; and
2. for CG-SDT, the terminal preferentially performs BWP switching,
one of the following is performed:
1. for RA-SDT, Solution 2 is performed: Specifically, the terminal initiates SDT; and
2. for CG-SDT, Solution 1 is performed: Specifically, if the terminal is configured with the second BWP, the terminal switches to the second BWP.

### Solution 5:

If a network side configures a separate initial BWP and needs to configure SDT, the SDT needs to be configured on the separate initial BWP.

### Embodiment 4:

This embodiment is mainly described by using Scenario 3 as an example. Scenario 3: No SDT configuration is configured on a first BWP, and an SDT configuration is configured on a second BWP.

For Scenario 3, there may be the following solutions:
Solution 1: If a terminal is configured with the second BWP, the terminal switches to the second BWP.

Further, the terminal initiates SDT based on the SDT configuration configured on the second BWP.

Solution 2: A terminal initiates SDT.

If the terminal is configured with the second BWP, the terminal switches to the second BWP.

There is a sequence between initiating the SDT and switching to the second BWP.

Further, the terminal initiates the SDT. Specifically, if SDT is configured on the first BWP and/or the second BWP, the terminal initiates the SDT. At least one of the following is specifically included:
1. The terminal does not initiate the SDT based on the SDT configuration configured on the second BWP.

Specifically, during initiation of the SDT, the SDT is not initiated based on the SDT configuration on any BWP, and an initial SDT process is first performed.

Then, during specific SDT resource selection or transmission, an SDT configuration on a specific BWP for application is determined.

Further, the terminal switches to the second BWP, further including: performing the SDT based on the configuration on the second BWP.

2. The terminal initiates the SDT based on the SDT configuration configured on the second BWP.

Further, the terminal performs the SDT based on the configuration on the second BWP.

3. The terminal does not initiate the SDT.

Specifically, if the terminal determines that no SDT configuration exists on the first BWP, the terminal does not initiate the SDT.

Solution 3: The terminal receives a network indication. The network indication is used to indicate the terminal to preferentially perform BWP switching or preferentially initiate the SDT.

If a network indicates the terminal to preferentially perform BWP switching, Solution 1 is performed: Specifically, if the terminal is configured with the second BWP, the terminal switches to the second BWP.

If a network indicates the terminal to preferentially initiate the SDT, Solution 2 is performed: Specifically, the terminal initiates the SDT. Further, if the second BWP is configured and SDT is configured on the second BWP, the BWP is switched to the second BWP.

Solution 4.1: For RA-SDT, Solution 1 is performed:

Specifically, if at least one of the following conditions is met:
1. configured SDT is RA-SDT;
2. a configured SDT resource is an RA-SDT resource; and
3. the terminal determines that initiated or executed SDT is RA-SDT, and
if the terminal is configured with the second BWP, the terminal switches to the second BWP.

Further, the SDT is initiated based on the SDT configuration on the configured second BWP.

For CG-SDT, Solution 2 is performed:
Specifically, if at least one of the following conditions is met:
1. configured SDT is CG-SDT;
2. a configured SDT resource is a CG-SDT resource; and
3. the terminal determines that initiated or executed SDT is CG-SDT,
the terminal initiates the SDT. Further, if the second BWP is configured and SDT is configured on the second BWP, the BWP is switched to the second BWP.

Solution 4.2: For RA-SDT, Solution 2 is performed:
Specifically, if at least one of the following conditions is met:
1. configured SDT is RA-SDT;
2. a configured SDT resource is an RA-SDT resource; and
3. the terminal determines that initiated or executed SDT is RA-SDT,
the terminal initiates the SDT. Further, if the second BWP is configured and SDT is configured on the second BWP, the BWP is switched to the second BWP.

For CG-SDT, Solution 1 is performed:
Specifically, if at least one of the following conditions is met:
1. configured SDT is CG-SDT;
2. a configured SDT resource is a CG-SDT resource; and
3. the terminal determines that initiated or executed SDT is CG-SDT, and
if the terminal is configured with the second BWP, the terminal switches to the second BWP.

Solution 4.3: The terminal receives a network indication. The network indication is used to indicate the terminal to perform at least one of the following:
1. for RA-SDT, preferentially performing BWP switching, or preferentially performing SDT; and
2. for CG-SDT, preferentially performing BWP switching, or preferentially performing SDT.

Solution 4.1 or Solution 4.2 is selected based on the network indication.

Specifically, if at least one of the following is indicated:
1. for RA-SDT, the terminal preferentially performs BWP switching; and
2. for CG-SDT, the terminal preferentially initiates SDT,
one of the following is performed:
1. for RA-SDT, Solution 1 is performed: Specifically, if the terminal is configured with the second BWP, the terminal switches to the second BWP; and
2. for CG-SDT, Solution 2 is performed: Specifically, the terminal initiates the SDT. Further, if the second BWP is configured and SDT is configured on the second BWP, the BWP is switched to the second BWP.

Specifically, if at least one of the following is indicated:
1. for RA-SDT, the terminal preferentially initiates SDT; and
2. for CG-SDT, the terminal preferentially performs BWP switching,
one of the following is performed:
1. for RA-SDT, Solution 2 is performed: Specifically, the terminal initiates the SDT. Further, if the second BWP is configured and SDT is configured on the second BWP, the BWP is switched to the second BWP; and
2. for CG-SDT, Solution 1 is performed: Specifically, if the terminal is configured with the second BWP, the terminal switches to the second BWP.

Solution 5.2: If a network side configures a separate initial BWP and configures SDT on the separate initial BWP, no SDT is configured on an initial BWP. In this case, the terminal performs one of the following:
1. the terminal assumes that the SDT on the separate initial BWP is also applicable to the initial BWP; and
2. the terminal assumes that SDT on the initial BWP is consistent with the SDT configured on the separate Initial BWP.

Further, the terminal initiates SDT and/or switches BWPs by using Solution 1 to Solution 4.

### Embodiment 5:

This embodiment is described by using Scenario 4 as an example. Scenario 4: No SDT configuration is configured on a first BWP, and no SDT configuration is configured on a second BWP.

For Scenario 4, if a terminal is configured with the second BWP, the terminal switches to the second BWP.

In consideration of the foregoing extensions (paging monitoring, PEI monitoring, wake-up signal WUS monitoring, random access, and system information receiving), if no SDT is configured on the first BWP and the second BWP, but a configuration corresponding to another process is configured, this is similar to the foregoing three scenarios of the SDT configuration. Details are not described herein again.

BWP switching processing provided in this embodiment of this application may be performed by a BWP switching processing apparatus. In this embodiment of this application, the BWP switching processing apparatus provided in the embodiments of this application is described by using an example in which the BWP switching processing apparatus performs the BWP switching processing method.

FIG. 4 is a structural diagram of a BWP switching processing apparatus according to an embodiment of this application. As shown in FIG. 4, a BWP switching processing apparatus 400 includes:
an obtaining module 401, configured to obtain a target configuration, where the target configuration is a configuration of at least one of a target operation and a bandwidth part BWP; and
an execution module 402, configured to perform at least one of the target operation and BWP switching based on the target configuration in a case that a preset condition corresponding to the target operation or a second BWP is met, where the BWP switching includes switching from a first BWP to the second BWP.

In a case that the target operation and the BWP switching are to be performed, the target operation is preferentially performed, and then the BWP switching is performed; or the BWP switching is preferentially performed, and then the target operation is performed.

The target operation includes at least one of the following:
small data transmission SDT initiation, paging monitoring, PEI monitoring, wake-up signal WUS monitoring, random access, and system information receiving.

Optionally, the target configuration includes at least one of the following:
a configuration of the target operation; and
a configuration of the second BWP.

Optionally, the configuration of the target operation is used to configure at least one of the following:
a data volume threshold used to determine whether to initiate SDT;
a reference signal received power RSRP threshold used to determine whether to initiate the SDT;
an RSRP threshold selected and configured for a synchronization signal block SSB of configured grant CG-SDT;
an RSRP threshold selected and configured for a RACH resource of random access RA-SDT;
an RSRP threshold selected and configured for an uplink carrier of the RA-SDT;
paging search space;
a control resource set CORESET;
random access channel RACH search space;
the RACH resource;
system information search space; and
common search space.

Optionally, the configuration of the target operation includes at least one of the following:
a per-BWP configuration of the target operation;
a per-cell configuration that is of the target operation and that is configured for the first BWP or the second BWP; and
a per-terminal configuration that is of the target operation and that is configured for the first BWP or the second BWP.

Optionally, the configuration of the second BWP is used to configure at least one of the following:
an SDT type on the second BWP; and
an SDT resource on the second BWP.

Optionally, that the preset condition corresponding to the target operation or the second BWP is met includes at least one of the following:
an execution condition of the target operation is met;
an execution condition of the BWP switching is met;
the second BWP is configured;
the configuration of the target operation is configured on the second BWP;
the configuration of the target operation is configured on the first BWP;
the configuration of the target operation is applicable to the second BWP;
the configuration of the target operation is applicable to the first BWP;
the target operation is configured on the first BWP;
the target operation is configured on the second BWP;
the target operation is applicable to the first BWP;
the target operation is applicable to the second BWP;
a type of the target operation configured on the first BWP is a preset type;
a type of the target operation configured on the second BWP is a preset type;
a resource of the target operation configured on the first BWP is a preset resource;
a resource of the target operation configured on the second BWP is a preset resource;
a type of the target operation applicable to the first BWP is a preset type;
a type of the target operation applicable to the second BWP is a preset type;
a resource of the target operation applicable to the first BWP is a preset resource; and
a resource of the target operation applicable to the second BWP is a preset resource.

Optionally, the first BWP includes at least one of the following:
an initial BWP, a BWP configured with a cell defining CD-SSB, a BWP including CORESET#0, and a BWP for performing a first operation, where the first operation includes at least one of the following:
system information receiving, paging monitoring, PEI monitoring, SSB receiving, random access, CD-SSB measurement, cell selection, cell reselection, camping, and SDT.

Optionally, the second BWP includes at least one of the following:
a separate initial BWP, a RedCap-specific initial BWP, a BWP configured with a non-cell defining NCD-SSB, a BWP including no CORESET#0, a BWP configured with no CD-SSB, a non-initial BWP, another inter-band BWP, another intra-band BWP, another inter-frequency BWP, another intra-frequency BWP, and a BWP for performing a second operation, where the second operation includes at least one of the following:
NCD-SSB receiving, NCD-SSB measurement, cell selection, cell reselection, camping, and SDT.

Optionally, in a case that the second BWP includes the separate initial BWP, SDT is configured on the separate initial BWP or SDT is applicable to the separate initial BWP; or
in a case that the target configuration indicates that the second BWP includes the separate initial BWP, and no SDT is configured on the separate initial BWP or no SDT is applicable to the separate initial BWP, the terminal determines that the target configuration is invalid; or
in a case that the second BWP includes the separate initial BWP, and no SDT is configured on the separate initial BWP or no SDT is applicable to the separate initial BWP, the terminal performs one of the following:
   determining that SDT configured on the initial BWP or SDT applicable to the initial BWP is also applicable to the separate initial BWP; and
   determining that SDT on the separate initial BWP or SDT applicable to the initial BWP is consistent with the SDT configured on the initial BWP or the SDT applicable to the initial BWP.

Optionally, the SDT includes at least one of the following:
random access RA-SDT, subsequent transmission of the RA-SDT, configured grant CG-SDT, subsequent transmission of the CG-SDT.

Optionally, a priority of the BWP switching is higher than a priority of the target operation; or
a priority of the target operation is higher than a priority of the BWP switching; or
a network side configures preferentially performing the BWP switching; or
a network side configures preferentially performing the target operation.

Optionally, in a case that the target operation includes the RA-SDT, the BWP switching is preferentially performed, and then the RA-SDT is performed; or
in a case that the target operation includes the CG-SDT, the CG-SDT is preferentially performed, and then the BWP switching is performed; or
in a case that the target operation includes the RA-SDT, the RA-SDT is preferentially performed, and then the BWP switching is performed; or
in a case that the target operation includes the CG-SDT, the BWP switching is preferentially performed, and then the CG-SDT is performed.

Optionally, the performing at least one of the target operation and BWP switching includes:
performing the BWP switching in a case that a BWP switching condition is met, and then performing the target operation if the second BWP meets the execution condition of the target operation; or
performing the target operation in a case that the execution condition of the target operation is met, and then performing the BWP switching if the BWP switching condition is met.

The BWP switching condition includes one of the following:
the second BWP is configured, an SDT resource exists on the second BWP, and the SDT type on the second BWP is a preset type.

The execution condition of the target operation includes:
an SDT resource is configured.

Optionally, the execution module 402 is configured to:
switch, from the first BWP to the second BWP in a case that an SDT configuration is configured on the first BWP or SDT is applicable to the first BWP, and no SDT configuration is configured on the second BWP or no SDT is applicable to the second BWP; or
preferentially initiate the SDT, and then switch from the first BWP to the second BWP, in a case that an SDT configuration is configured on the first BWP or SDT is applicable to the first BWP, and no SDT configuration is configured on the second BWP or no SDT is applicable to the second BWP; or
initiate the SDT in a case that an SDT configuration is configured on the first BWP or SDT is applicable to the first BWP, and no SDT configuration is configured on the second BWP or no SDT is applicable to the second BWP.

Optionally, the SDT initiation includes at least one of the following:
initiating the SDT based on the SDT configuration configured on the first BWP; and
initializing an SDT process, where the SDT configuration is applied when SDT resource selection or data transmission is performed.

Optionally, the apparatus further includes:
a stopping module, configured to stop or interrupt the SDT in a case of switching to the second BWP.

Optionally, the execution module 402 is configured to:
switch from the first BWP to the second BWP in a case that an SDT configuration is configured on the first BWP or SDT is applicable to the first BWP, no SDT configuration is configured on the second BWP or no SDT is applicable to the second BWP, and a first condition is met.

That the first condition is met includes at least one of the following:
SDT configured by the SDT configuration on the first BWP is RA-SDT;
an SDT resource configured by the SDT configuration on the first BWP is an RA-SDT resource;
the terminal determines that initiated or executed SDT is RA-SDT; and
for the RA-SDT, the network side configures preferentially performing the BWP switching; or
that the first condition is met includes at least one of the following:
   SDT configured by the SDT configuration on the first BWP is CG-SDT;
   an SDT resource configured by the SDT configuration on the first BWP is a CG-SDT resource;
   the terminal determines that initiated or executed SDT is CG-SDT; and
   for the CG-SDT, the network side configures preferentially performing the BWP switching.

Optionally, the SDT initiation is initiating the CG-SDT in a second condition, and the second condition includes at least one of the following:
SDT configured by the SDT configuration on the first BWP is CG-SDT;
an SDT resource configured by the SDT configuration on the first BWP is a CG-SDT resource;
the terminal determines that initiated or executed SDT is CG-SDT; and
for the CG-SDT, the network side configures preferentially initiating the SDT; or
the SDT initiation is initiating the RA-SDT in a second condition, and the second condition includes at least one of the following:
   SDT configured by the SDT configuration on the first BWP is RA-SDT;
   an SDT resource configured by the SDT configuration on the first BWP is an RA-SDT resource;
   the terminal determines that initiated or executed SDT is RA-SDT; and
   for the RA-SDT, the network side configures preferentially initiating the SDT.

Optionally, the execution module 402 is configured to:
preferentially switch from the first BWP to the second BWP, and then initiate the SDT, in a case that an SDT configuration is configured on the first BWP or SDT is applicable to the first BWP, and an SDT configuration is configured on the second BWP or SDT is applicable to the second BWP; or
preferentially initiate the SDT, and then switch from the first BWP to the second BWP, in a case that an SDT configuration is configured on the first BWP or SDT is applicable to the first BWP, and an SDT configuration is configured on the second BWP or SDT is applicable to the second BWP.

Optionally, the SDT initiation includes at least one of the following:
initiating the SDT based on the SDT configuration configured on the second BWP; or
initializing an SDT process, where the SDT configuration is applied when SDT resource selection or data transmission is performed;
initiating the SDT based on the SDT configuration configured on the first BWP; and
initiating the SDT based on an SDT configuration configured on a current BWP.

Optionally, the execution module 402 is configured to:
preferentially switch from the first BWP to the second BWP, and then initiate the SDT, in a case that an SDT configuration is configured on the first BWP or SDT is applicable to the first BWP, an SDT configuration is configured on the second BWP or SDT is applicable to the second BWP, and a third condition is met.

That the third condition is met includes at least one of the following:
SDT configured by the SDT configuration on the first BWP is RA-SDT;
an SDT resource configured by the SDT configuration on the first BWP is an RA-SDT resource;
SDT configured by the SDT configuration on the second BWP is RA-SDT;
an SDT resource configured by the SDT configuration on the second BWP is an RA-SDT resource;
the terminal determines that initiated or executed SDT is RA-SDT; and
for the RA-SDT, the network side configures preferentially performing the BWP switching; or
that the third condition is met includes at least one of the following:
   SDT configured by the SDT configuration on the first BWP is CG-SDT;
   an SDT resource configured by the SDT configuration on the first BWP is a CG-SDT resource;
   SDT configured by the SDT configuration on the second BWP is CG-SDT;
   an SDT resource configured by the SDT configuration on the second BWP is a CG-SDT resource;
   the terminal determines that initiated or executed SDT is CG-SDT; and
   for the CG-SDT, the network side configures preferentially performing the BWP switching.

Optionally, the execution module 402 is configured to:
preferentially initiate the SDT, and then switch from the first BWP to the second BWP, in a case that an SDT configuration is configured on the first BWP or SDT is applicable to the first BWP, an SDT configuration is configured on the second BWP or SDT is applicable to the second BWP, and a fourth condition is met.

That the fourth condition is met includes at least one of the following:
SDT configured by the SDT configuration on the first BWP is CG-SDT;
an SDT resource configured by the SDT configuration on the first BWP is a CG-SDT resource;
SDT configured by the SDT configuration on the second BWP is CG-SDT;
an SDT resource configured by the SDT configuration on the second BWP is a CG-SDT resource;
the terminal determines that initiated or executed SDT is CG-SDT; and
for the CG-SDT, the network side configures preferentially initiating the SDT; or
that the fourth condition is met includes at least one of the following:
   SDT configured by the SDT configuration on the first BWP is RA-SDT;
   an SDT resource configured by the SDT configuration on the first BWP is an RA-SDT resource;
   SDT configured by the SDT configuration on the second BWP is RA-SDT;
   an SDT resource configured by the SDT configuration on the second BWP is an RA-SDT resource;
   the terminal determines that initiated or executed SDT is RA-SDT; and
   for the RA-SDT, the network side configures preferentially initiating the SDT.

Optionally, the execution module 402 is configured to:
preferentially switch from the first BWP to the second BWP, and then initiate the SDT, in a case that no SDT configuration is configured on the first BWP or no SDT is applicable to the first BWP, and an SDT configuration is configured on the second BWP or SDT is applicable to the second BWP; or
preferentially initiate the SDT, and then switch from the first BWP to the second BWP, in a case that no SDT configuration is configured on the first BWP or no SDT is applicable to the first BWP, and an SDT configuration is configured on the second BWP or SDT is applicable to the second BWP; or
switch from the first BWP to the second BWP in a case that no SDT configuration is configured on the first BWP or no SDT is applicable to the first BWP, and an SDT configuration is configured on the second BWP or SDT is applicable to the second BWP.

Optionally, the SDT initiation includes at least one of the following:
initiating the SDT based on the SDT configuration configured on the second BWP; or
initiating an initial SDT process, where an SDT configuration is selected for application when SDT resource selection or data transmission is performed; and
initiating the SDT based on an SDT configuration configured on a current BWP.

Optionally, the apparatus further includes:
a transmission module, configured to: after switching to the second BWP, perform SDT based on the SDT configuration configured on the second BWP.

Optionally, the execution module 402 is configured to:
preferentially switch from the first BWP to the second BWP, and then initiate the SDT, in a case that no SDT configuration is configured on the first BWP or no SDT is applicable to the first BWP, an SDT configuration is configured on the second BWP or SDT is applicable to the second BWP, and a fifth condition is met.

That the fifth condition is met includes at least one of the following:
SDT configured by the SDT configuration on the second BWP is RA-SDT;
an SDT resource configured by the SDT configuration on the second BWP is an RA-SDT resource;
the terminal determines that initiated or executed SDT is RA-SDT; and
for the RA-SDT, the network side configures preferentially performing the BWP switching; or
that the fifth condition is met includes at least one of the following:
   SDT configured by the SDT configuration on the second BWP is CG-SDT;
   an SDT resource configured by the SDT configuration on the second BWP is a CG-SDT resource;
   the terminal determines that initiated or executed SDT is CG-SDT; and
   for the CG-SDT, the network side configures preferentially performing the BWP switching.

Optionally, the execution module 402 is configured to:
preferentially initiate the SDT, and then switch from the first BWP to the second BWP, in a case that no SDT configuration is configured on the first BWP or no SDT is applicable to the first BWP, an SDT configuration is configured on the second BWP or SDT is applicable to the second BWP, and a sixth condition is met.

That the sixth condition is met includes at least one of the following:
SDT configured by the SDT configuration on the second BWP is CG-SDT;
an SDT resource configured by the SDT configuration on the second BWP is a CG-SDT resource;
the terminal determines that initiated or executed SDT is CG-SDT; and
for the CG-SDT, the network side configures preferentially initiating the SDT; or
that the sixth condition is met includes at least one of the following:
   SDT configured by the SDT configuration on the second BWP is RA-SDT;
   an SDT resource configured by the SDT configuration on the second BWP is an RA-SDT resource;
   the terminal determines that initiated or executed SDT is RA-SDT; and
   for the RA-SDT, the network side configures preferentially initiating the SDT.

Optionally, in a case that an SDT configuration of the target operation is a per-cell configuration, the SDT configuration is applied to all BWPs.

Optionally, in a case that the target operation includes performing the SDT at the initial BWP, performing the SDT on the separate initial BWP includes at least one of the following:
sending an uplink signal on an initial uplink BWP; and
monitoring a downlink signal on an initial downlink BWP.

Optionally, the performing at least one of the target operation and BWP switching includes:
in a case that the terminal is configured with the SDT and the second BWP, preferentially performing the SDT, and then switching from the first BWP to the second BWP.

The BWP switching processing apparatus may improve transmission performance of the terminal.

The BWP switching processing apparatus in this embodiment of this application may be an electronic device, for example, an electronic device with an operating system, or may be a component in an electronic device, for example, an integrated circuit or a chip. The electronic device may be a terminal, or may be another device different from a terminal. For example, the terminal may include but is not limited to the foregoing listed types of the terminal 11. The another device may be a server, a network attached storage (Network Attached Storage, NAS), or the like. This is not specifically limited in this embodiment of this application.

The BWP switching processing apparatus provided in this embodiment of this application can implement processes implemented in the method embodiment in FIG. 2, and achieve same technical effects. To avoid repetition, details are not described herein again.

FIG. 5 is a structural diagram of a configuration sending apparatus according to an embodiment of this application. As shown in FIG. 5, a configuration sending apparatus 500 includes:
a sending module 501, configured to send a target configuration to a terminal, where the target configuration is a configuration of at least one of a target operation and a bandwidth part BWP.

The target configuration is used to perform, by the terminal, at least one of the target operation and BWP switching based on the target configuration in a case that a preset condition corresponding to the target operation or a second BWP is met. The BWP switching includes switching from a first BWP to the second BWP.

In a case that the target operation and the BWP switching are to be performed, the target operation is preferentially performed, and then the BWP switching is performed; or the BWP switching is preferentially performed, and then the target operation is performed.

The target operation includes at least one of the following:
small data transmission SDT initiation, paging monitoring, PET monitoring, wake-up signal WUS monitoring, random access, and system information receiving.

Optionally, the target configuration includes at least one of the following:
a configuration of the target operation; and
a configuration of the second BWP.

Optionally, the configuration of the target operation is used to configure at least one of the following:
a data volume threshold used to determine whether to initiate SDT;
a reference signal received power RSRP threshold used to determine whether to initiate the SDT;
an RSRP threshold selected and configured for a synchronization signal block SSB of configured grant CG-SDT;
an RSRP threshold selected and configured for a RACH resource of random access RA-SDT;
an RSRP threshold selected and configured for an uplink carrier of the RA-SDT;
paging search space;
CORESET;
random access channel RACH search space;
the RACH resource;
system information search space; and
common search space.

Optionally, the configuration of the target operation includes at least one of the following:
a per-BWP configuration of the target operation;
a per-cell configuration that is of the target operation and that is configured for the first BWP or the second BWP; and
a per-terminal configuration that is of the target operation and that is configured for the first BWP or the second BWP.

Optionally, the configuration of the second BWP is used to configure at least one of the following:
an SDT type on the second BWP; and
an SDT resource on the second BWP.

The configuration sending apparatus may improve transmission performance of the terminal.

The configuration sending apparatus in this embodiment of this application may be an electronic device, for example, an electronic device with an operating system, or may be a component such as an integrated circuit or a chip in an electronic device. The electronic device may be a terminal or a network side device.

The configuration sending apparatus provided in this embodiment of this application can implement processes implemented in the method embodiment in FIG. 3, and achieve same technical effects. To avoid repetition, details are not described herein again.

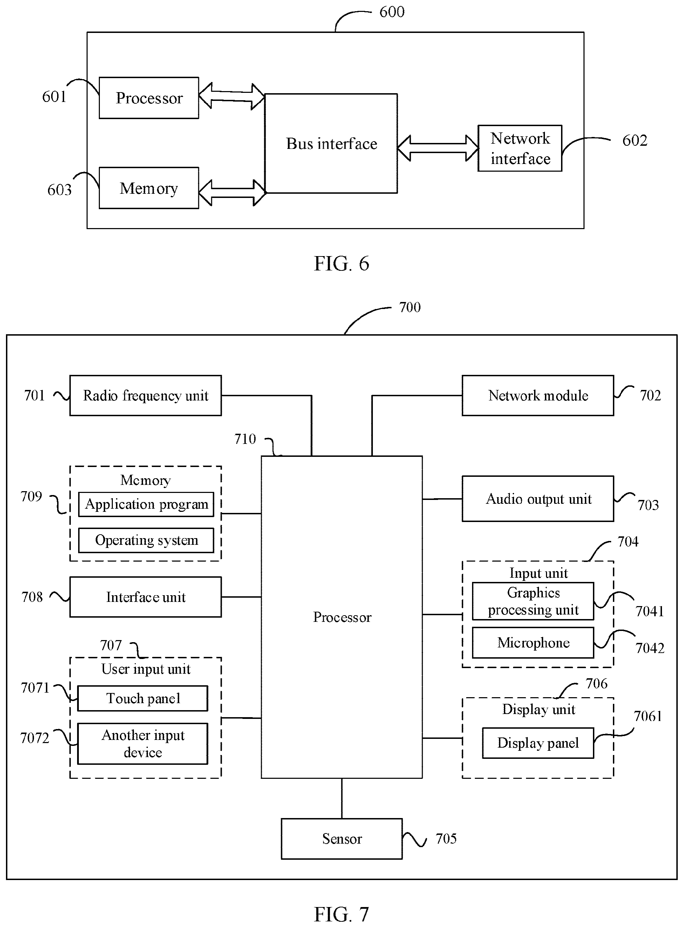

As shown in FIG. 6, an embodiment of this application further provides a communication device 600, including a processor 601 and a memory 603, and further including a bus interface and a network interface 602. The memory 603 stores a program or instructions capable of being run on the processor 601. For example, when the communication device 600 is a terminal, and the program or the instructions are executed by the processor 601, the program or the instructions implement the steps of the BWP switching processing method embodiments, and can achieve the same technical effects. When the communication device 600 is a network side device, and the program or the instructions are executed by the processor 601, the program or the instructions implement the steps of the configuration sending method embodiments, and can achieve the same technical effects. To avoid repetition, details are not described herein again.

An embodiment of this application further provides a terminal, including a processor and a communication interface. The communication interface is coupled to the processor. The processor is configured to run a program or instructions to implement the steps in the method embodiment shown in FIG. 2. The embodiment corresponds to the foregoing method embodiment. Each implementation process and implementation of the foregoing method embodiment may be applied to the terminal embodiment, and same technical effects can be achieved.

An embodiment of this application further provides a terminal, including a processor and a communication interface. The communication interface is configured to obtain a target configuration, where the target configuration is a configuration of at least one of a target operation and a bandwidth part BWP; and the processor is configured to perform at least one of the target operation and BWP switching based on the target configuration in a case that a preset condition corresponding to the target operation or a second BWP is met. The BWP switching includes switching from a first BWP to the second BWP. In a case that the target operation and the BWP switching are to be performed, the target operation is preferentially performed, and then the BWP switching is performed; or the BWP switching is preferentially performed, and then the target operation is performed; and the target operation includes at least one of the following: small data transmission SDT initiation, paging monitoring, PEI monitoring, wake-up signal WUS monitoring, random access, and system information receiving. The embodiment corresponds to the foregoing method embodiment. Each implementation process and implementation of the foregoing method embodiment may be applied to the terminal embodiment, and same technical effects can be achieved.

Specifically, FIG. 7 is a schematic diagram of a hardware structure of a terminal for implementing an embodiment of this application.

The terminal 700 includes but is not limited to at least some components of a radio frequency unit 701, a network module 702, an audio output unit 703, an input unit 704, a sensor 705, a display unit 706, a user input unit 707, an interface unit 708, a memory 709, a processor 710, and the like.

A person skilled in the art may understand that the terminal 700 may further include a power supply (for example, a battery) that supplies power to each component. The power supply may be logically connected to the processor 710 by using a power management system, to implement functions such as charging management, discharging management, and power consumption management through the power management system. The structure of the terminal shown in FIG. 7 does not constitute a limitation on the terminal. The terminal may include more or fewer components than those shown in the figure, or combine some components, or have different component arrangements. Details are not described herein again.

It should be understood that in this embodiment of this application, the input unit 704 may include a graphics processing unit (Graphics Processing Unit, GPU) 7041 and a microphone 7042, and the graphics processing unit 7041 processes image data of a still picture or a video obtained by an image capture apparatus (for example, a camera) in a video capture mode or an image capture mode. The display unit 706 may include a display panel 7061, and the display panel 7061 may be configured in a form of a liquid crystal display, an organic light-emitting diode, or the like. The user input unit 707 includes at least one of a touch panel 7071 or another input device 7072. The touch panel 7071 is also referred to as a touchscreen. The touch panel 7071 may include two parts: a touch detection apparatus and a touch controller. The another input device 7072 may include but is not limited to a physical keyboard, a function key (such as a volume control key or an on/off key), a trackball, a mouse, and an operating lever. Details are not described herein again.

In this embodiment of this application, after receiving downlink data from a network side device, the radio frequency unit 701 may transmit the downlink data to the processor 710 for processing. In addition, the radio frequency unit 701 may send uplink data to a network side device. Generally, the radio frequency unit 701 includes but is not limited to an antenna, an amplifier, a transceiver, a coupler, a low-noise amplifier, a duplexer, and the like.

The memory 709 may be configured to store a software program or instructions and various types of data. The memory 709 can mainly include a first storage area for storing a program or instructions and a second storage area for storing data. The first storage area can store an operating system, an application program or instructions required by at least one function (for example, a sound play function or an image play function), and the like. In addition, the memory 709 may include a volatile memory or a nonvolatile memory. The nonvolatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDRSDRAM), an enhanced synchronous dynamic random access memory (Enhanced SDRAM, ESDRAM), a synchlink dynamic random access memory (Synch link DRAM, SLDRAM), and a direct rambus random access memory (Direct Rambus RAM, DRRAM). The memory 709 in this embodiment of this application includes but is not limited to these memories and any other suitable type of memory.

The processor 710 may include one or more processing units. Optionally, the processor 710 integrates an application processor and a modem processor. The application processor mainly processes operations related to an operating system, a user interface, an application program, and the like. The modem processor, for example, a baseband processor, mainly processes a wireless communication signal. It may be understood that, the foregoing modem processor may not be integrated into the processor 710.

In an embodiment, the radio frequency unit 701 is configured to: obtain a target configuration, where the target configuration is a configuration of at least one of a target operation and a bandwidth part BWP; and perform at least one of the target operation and BWP switching based on the target configuration in a case that a preset condition corresponding to the target operation or a second BWP is met. The BWP switching includes switching from a first BWP to the second BWP.

In a case that the target operation and the BWP switching are to be performed, the target operation is preferentially performed, and then the BWP switching is performed; or the BWP switching is preferentially performed, and then the target operation is performed.

The target operation includes at least one of the following:
small data transmission SDT initiation, paging monitoring, PEI monitoring, wake-up signal WUS monitoring, random access, and system information receiving.

Optionally, the target configuration includes at least one of the following:
a configuration of the target operation; and
a configuration of the second BWP.

Optionally, the configuration of the target operation is used to configure at least one of the following:
a data volume threshold used to determine whether to initiate SDT;
a reference signal received power RSRP threshold used to determine whether to initiate the SDT;
an RSRP threshold selected and configured for a synchronization signal block SSB of configured grant CG-SDT;
an RSRP threshold selected and configured for a RACH resource of random access RA-SDT;
an RSRP threshold selected and configured for an uplink carrier of the RA-SDT;
paging search space;
a control resource set CORESET;
random access channel RACH search space;
the RACH resource;
system information search space; and
common search space.

Optionally, the configuration of the target operation includes at least one of the following:
a per-BWP configuration of the target operation;
a per-cell configuration that is of the target operation and that is configured for the first BWP or the second BWP; and
a per-terminal configuration that is of the target operation and that is configured for the first BWP or the second BWP.

Optionally, the configuration of the second BWP is used to configure at least one of the following:
an SDT type on the second BWP; and
an SDT resource on the second BWP.

Optionally, that the preset condition corresponding to the target operation or the second BWP is met includes at least one of the following:
an execution condition of the target operation is met;
an execution condition of the BWP switching is met;
the second BWP is configured;
the configuration of the target operation is configured on the second BWP;
the configuration of the target operation is configured on the first BWP;
the configuration of the target operation is applicable to the second BWP;
the configuration of the target operation is applicable to the first BWP;
the target operation is configured on the first BWP;
the target operation is configured on the second BWP;
the target operation is applicable to the first BWP;
the target operation is applicable to the second BWP;
a type of the target operation configured on the first BWP is a preset type;
a type of the target operation configured on the second BWP is a preset type;
a resource of the target operation configured on the first BWP is a preset resource;
a resource of the target operation configured on the second BWP is a preset resource;
a type of the target operation applicable to the first BWP is a preset type;
a type of the target operation applicable to the second BWP is a preset type;
a resource of the target operation applicable to the first BWP is a preset resource; and
a resource of the target operation applicable to the second BWP is a preset resource.

Optionally, the first BWP includes at least one of the following:
an initial BWP, a BWP configured with a cell defining CD-SSB, a BWP including CORESET#0, and a BWP for performing a first operation, where the first operation includes at least one of the following:
system information receiving, paging monitoring, PEI monitoring, SSB receiving, random access, CD-SSB measurement, cell selection, cell reselection, camping, and SDT.

Optionally, the second BWP includes at least one of the following:
a separate initial BWP, a RedCap-specific initial BWP, a BWP configured with a non-cell defining NCD-SSB, a BWP including no CORESET#0, a BWP configured with no CD-SSB, a non-initial BWP, another inter-band BWP, another intra-band BWP, another inter-frequency BWP, another intra-frequency BWP, and a BWP for performing a second operation, where the second operation includes at least one of the following:
NCD-SSB receiving, NCD-SSB measurement, cell selection, cell reselection, camping, and SDT.

Optionally, in a case that the second BWP includes the separate initial BWP, SDT is configured on the separate initial BWP or SDT is applicable to the separate initial BWP; or
in a case that the target configuration indicates that the second BWP includes the separate initial BWP, and no SDT is configured on the separate initial BWP or no SDT is applicable to the separate initial BWP, the terminal determines that the target configuration is invalid; or
in a case that the second BWP includes the separate initial BWP, and no SDT is configured on the separate initial BWP or no SDT is applicable to the separate initial BWP, the terminal performs one of the following:
   determining that SDT configured on the initial BWP or SDT applicable to the initial BWP is also applicable to the separate initial BWP; and
   determining that SDT on the separate initial BWP or SDT applicable to the initial BWP is consistent with the SDT configured on the initial BWP or the SDT applicable to the initial BWP.

Optionally, the SDT includes at least one of the following:
random access RA-SDT, subsequent transmission of the RA-SDT, configured grant CG-SDT, subsequent transmission of the CG-SDT.

Optionally, a priority of the BWP switching is higher than a priority of the target operation; or
a priority of the target operation is higher than a priority of the BWP switching; or
a network side configures preferentially performing the BWP switching; or
a network side configures preferentially performing the target operation.

Optionally, in a case that the target operation includes the RA-SDT, the BWP switching is preferentially performed, and then the RA-SDT is performed; or
in a case that the target operation includes the CG-SDT, the CG-SDT is preferentially performed, and then the BWP switching is performed; or
in a case that the target operation includes the RA-SDT, the RA-SDT is preferentially performed, and then the BWP switching is performed; or
in a case that the target operation includes the CG-SDT, the BWP switching is preferentially performed, and then the CG-SDT is performed.

Optionally, the performing at least one of the target operation and BWP switching includes:
performing the BWP switching in a case that a BWP switching condition is met, and then performing the target operation if the second BWP meets the execution condition of the target operation; or
performing the target operation in a case that the execution condition of the target operation is met, and then performing the BWP switching if the BWP switching condition is met.

The BWP switching condition includes one of the following:
the second BWP is configured, an SDT resource exists on the second BWP, and the SDT type on the second BWP is a preset type.

The execution condition of the target operation includes:
an SDT resource is configured.

Optionally, the performing at least one of the target operation and bandwidth part BWP switching based on the target configuration in a case that a preset condition corresponding to the target operation or a second BWP is met includes:
switching from the first BWP to the second BWP in a case that an SDT configuration is configured on the first BWP or SDT is applicable to the first BWP, and no SDT configuration is configured on the second BWP or no SDT is applicable to the second BWP; or
preferentially initiating the SDT, and then switching from the first BWP to the second BWP, in a case that an SDT configuration is configured on the first BWP or SDT is applicable to the first BWP, and no SDT configuration is configured on the second BWP or no SDT is applicable to the second BWP; or
initiating the SDT in a case that an SDT configuration is configured on the first BWP or SDT is applicable to the first BWP, and no SDT configuration is configured on the second BWP or no SDT is applicable to the second BWP.

Optionally, the SDT initiation includes at least one of the following:
initiating the SDT based on the SDT configuration configured on the first BWP; and
initializing an SDT process, where the SDT configuration is applied when SDT resource selection or data transmission is performed.

Optionally, the radio frequency unit 701 is further configured to:
stop or interrupt the SDT in a case of switching to the second BWP.

Optionally, that the terminal switches from the first BWP to the second BWP in the case that an SDT configuration is configured on the first BWP or SDT is applicable to the first BWP, and no SDT configuration is configured on the second BWP or no SDT is applicable to the second BWP includes:
the terminal switches from the first BWP to the second BWP in a case that an SDT configuration is configured on the first BWP or SDT is applicable to the first BWP, no SDT configuration is configured on the second BWP or no SDT is applicable to the second BWP, and a first condition is met.

That the first condition is met includes at least one of the following:
SDT configured by the SDT configuration on the first BWP is RA-SDT;
an SDT resource configured by the SDT configuration on the first BWP is an RA-SDT resource;
the terminal determines that initiated or executed SDT is RA-SDT; and
for the RA-SDT, the network side configures preferentially performing the BWP switching; or
that the first condition is met includes at least one of the following:
   SDT configured by the SDT configuration on the first BWP is CG-SDT;
   an SDT resource configured by the SDT configuration on the first BWP is a CG-SDT resource;
   the terminal determines that initiated or executed SDT is CG-SDT; and
   for the CG-SDT, the network side configures preferentially performing the BWP switching.

Optionally, the SDT initiation is initiating the CG-SDT in a second condition, and the second condition includes at least one of the following:
SDT configured by the SDT configuration on the first BWP is CG-SDT;
an SDT resource configured by the SDT configuration on the first BWP is a CG-SDT resource;
the terminal determines that initiated or executed SDT is CG-SDT; and
for the CG-SDT, the network side configures preferentially initiating the SDT; or
the SDT initiation is initiating the RA-SDT in a second condition, and the second condition includes at least one of the following:
   SDT configured by the SDT configuration on the first BWP is RA-SDT;
   an SDT resource configured by the SDT configuration on the first BWP is an RA-SDT resource;
   the terminal determines that initiated or executed SDT is RA-SDT; and
   for the RA-SDT, the network side configures preferentially initiating the SDT.

Optionally, the performing at least one of the target operation and bandwidth part BWP switching based on the target configuration in a case that a preset condition corresponding to the target operation or a second BWP is met includes:
preferentially switching from the first BWP to the second BWP, and then initiating the SDT, in a case that an SDT configuration is configured on the first BWP or SDT is applicable to the first BWP, and an SDT configuration is configured on the second BWP or SDT is applicable to the second BWP; or
preferentially initiating the SDT, and then switching from the first BWP to the second BWP, in a case that an SDT configuration is configured on the first BWP or SDT is applicable to the first BWP, and an SDT configuration is configured on the second BWP or SDT is applicable to the second BWP.

Optionally, the SDT initiation includes at least one of the following:
initiating the SDT based on the SDT configuration configured on the second BWP; or
initializing an SDT process, where the SDT configuration is applied when SDT resource selection or data transmission is performed;
initiating the SDT based on the SDT configuration configured on the first BWP; and
initiating the SDT based on an SDT configuration configured on a current BWP.

Optionally, the preferentially switching from the first BWP to the second BWP, and then initiating the SDT, in a case that an SDT configuration is configured on the first BWP or SDT is applicable to the first BWP, and an SDT configuration is configured on the second BWP or SDT is applicable to the second BWP includes:
preferentially switching from the first BWP to the second BWP, and then initiating the SDT, in a case that an SDT configuration is configured on the first BWP or SDT is applicable to the first BWP, an SDT configuration is configured on the second BWP or SDT is applicable to the second BWP, and a third condition is met.

That the third condition is met includes at least one of the following:
SDT configured by the SDT configuration on the first BWP is RA-SDT;
an SDT resource configured by the SDT configuration on the first BWP is an RA-SDT resource;
SDT configured by the SDT configuration on the second BWP is RA-SDT;
an SDT resource configured by the SDT configuration on the second BWP is an RA-SDT resource;
the terminal determines that initiated or executed SDT is RA-SDT; and
for the RA-SDT, the network side configures preferentially performing the BWP switching; or
that the third condition is met includes at least one of the following:
   SDT configured by the SDT configuration on the first BWP is CG-SDT;
   an SDT resource configured by the SDT configuration on the first BWP is a CG-SDT resource;
   SDT configured by the SDT configuration on the second BWP is CG-SDT;
   an SDT resource configured by the SDT configuration on the second BWP is a CG-SDT resource;
   the terminal determines that initiated or executed SDT is CG-SDT; and
   for the CG-SDT, the network side configures preferentially performing the BWP switching.

Optionally, the preferentially initiating the SDT, and then switching from the first BWP to the second BWP, in a case that an SDT configuration is configured on the first BWP or SDT is applicable to the first BWP, and an SDT configuration is configured on the second BWP or SDT is applicable to the second BWP includes:
preferentially initiating the SDT, and then switch from the first BWP to the second BWP, in a case that an SDT configuration is configured on the first BWP or SDT is applicable to the first BWP, an SDT configuration is configured on the second BWP or SDT is applicable to the second BWP, and a fourth condition is met.

That the fourth condition is met includes at least one of the following:
SDT configured by the SDT configuration on the first BWP is CG-SDT;
an SDT resource configured by the SDT configuration on the first BWP is a CG-SDT resource;
SDT configured by the SDT configuration on the second BWP is CG-SDT;
an SDT resource configured by the SDT configuration on the second BWP is a CG-SDT resource;
the terminal determines that initiated or executed SDT is CG-SDT; and
for the CG-SDT, the network side configures preferentially initiating the SDT; or
that the fourth condition is met includes at least one of the following:
   SDT configured by the SDT configuration on the first BWP is RA-SDT;
   an SDT resource configured by the SDT configuration on the first BWP is an RA-SDT resource;
   SDT configured by the SDT configuration on the second BWP is RA-SDT;
   an SDT resource configured by the SDT configuration on the second BWP is an RA-SDT resource;
   the terminal determines that initiated or executed SDT is RA-SDT; and
   for the RA-SDT, the network side configures preferentially initiating the SDT.

Optionally, the performing at least one of the target operation and BWP switching based on the target configuration in a case that a preset condition corresponding to the target operation or a second BWP is met includes:
preferentially switching from the first BWP to the second BWP, and then initiating the SDT, in a case that no SDT configuration is configured on the first BWP or no SDT is applicable to the first BWP, and an SDT configuration is configured on the second BWP or SDT is applicable to the second BWP; or
preferentially initiating the SDT, and then switching from the first BWP to the second BWP, in a case that no SDT configuration is configured on the first BWP or no SDT is applicable to the first BWP, and an SDT configuration is configured on the second BWP or SDT is applicable to the second BWP; or
switching from the first BWP to the second BWP in a case that no SDT configuration is configured on the first BWP or no SDT is applicable to the first BWP, and an SDT configuration is configured on the second BWP or SDT is applicable to the second BWP.

Optionally, the SDT initiation includes at least one of the following:
initiating the SDT based on the SDT configuration configured on the second BWP; or
initiating an initial SDT process, where an SDT configuration is selected for application when SDT resource selection or data transmission is performed; and
initiating the SDT based on an SDT configuration configured on a current BWP.

Optionally, the radio frequency unit 701 is further configured to:
after switching to the second BWP, perform SDT based on the SDT configuration configured on the second BWP.

Optionally, the preferentially switching from the first BWP to the second BWP, and then initiating the SDT, in a case that no SDT configuration is configured on the first BWP or no SDT is applicable to the first BWP, and an SDT configuration is configured on the second BWP or SDT is applicable to the second BWP includes:
preferentially switching from the first BWP to the second BWP, and then initiating the SDT, in a case that no SDT configuration is configured on the first BWP or no SDT is applicable to the first BWP, an SDT configuration is configured on the second BWP or SDT is applicable to the second BWP, and a fifth condition is met.

That the fifth condition is met includes at least one of the following:
SDT configured by the SDT configuration on the second BWP is RA-SDT;
an SDT resource configured by the SDT configuration on the second BWP is an RA-SDT resource;
the terminal determines that initiated or executed SDT is RA-SDT; and
for the RA-SDT, the network side configures preferentially performing the BWP switching; or
that the fifth condition is met includes at least one of the following:
   SDT configured by the SDT configuration on the second BWP is CG-SDT;
   an SDT resource configured by the SDT configuration on the second BWP is a CG-SDT resource;
   the terminal determines that initiated or executed SDT is CG-SDT; and
   for the CG-SDT, the network side configures preferentially performing the BWP switching.

Optionally, the preferentially initiating the SDT, and then switching from the first BWP to the second BWP, in a case that no SDT configuration is configured on the first BWP or no SDT is applicable to the first BWP, and an SDT configuration is configured on the second BWP or SDT is applicable to the second BWP includes:
preferentially initiating the SDT, and then switching from the first BWP to the second BWP, in a case that no SDT configuration is configured on the first BWP or no SDT is applicable to the first BWP, an SDT configuration is configured on the second BWP or SDT is applicable to the second BWP, and a sixth condition is met.

That the sixth condition is met includes at least one of the following:
SDT configured by the SDT configuration on the second BWP is CG-SDT;
an SDT resource configured by the SDT configuration on the second BWP is a CG-SDT resource;
the terminal determines that initiated or executed SDT is CG-SDT; and
for the CG-SDT, the network side configures preferentially initiating the SDT; or
that the sixth condition is met includes at least one of the following:
   SDT configured by the SDT configuration on the second BWP is RA-SDT;
   an SDT resource configured by the SDT configuration on the second BWP is an RA-SDT resource;
   the terminal determines that initiated or executed SDT is RA-SDT; and
   for the RA-SDT, the network side configures preferentially initiating the SDT.

Optionally, in a case that an SDT configuration of the target operation is a per-cell configuration, the SDT configuration is applied to all BWPs.

Optionally, in a case that the target operation includes performing the SDT at the initial BWP, performing the SDT on the separate initial BWP includes at least one of the following:
sending an uplink signal on an initial uplink BWP; and
monitoring a downlink signal on an initial downlink BWP.

Optionally, the performing at least one of the target operation and BWP switching includes:
in a case that the terminal is configured with the SDT and the second BWP, preferentially performing the SDT, and then switching from the first BWP to the second BWP.

The terminal may improve transmission performance of the terminal.

It may be understood that for implementation processes of the implementations mentioned in this embodiment, reference may be made to related descriptions in the BWP switching processing method embodiment, and same or corresponding technical effects are achieved. To avoid repetition, details are not described herein again.

An embodiment of this application further provides a network side device, including a processor and a communication interface. The communication interface is coupled to the processor. The processor is configured to run a program or instructions to implement the steps in the method embodiment shown in FIG. 3. The communication device embodiment corresponds to the foregoing configuration sending method embodiment. Each implementation process and implementation of the foregoing method embodiment may be applied to the network side device embodiment, and same technical effects can be achieved.

An embodiment of this application further provides a network side device, including a processor and a communication interface. The communication interface is configured to send a target configuration to a terminal. The target configuration is a configuration of at least one of a target operation and a bandwidth part BWP. The target configuration is used to perform, by the terminal, at least one of the target operation and BWP switching based on the target configuration in a case that a preset condition corresponding to the target operation or a second BWP is met. The BWP switching includes switching from a first BWP to the second BWP. In a case that the target operation and the BWP switching are to be performed, the target operation is preferentially performed, and then the BWP switching is performed; or the BWP switching is preferentially performed, and then the target operation is performed; and the target operation includes at least one of the following: small data transmission SDT initiation, paging monitoring, PEI monitoring, wake-up signal WUS monitoring, random access, and system information receiving. The embodiment corresponds to the foregoing method embodiment. Each implementation process and implementation of the foregoing method embodiment may be applied to the terminal embodiment, and same technical effects can be achieved.

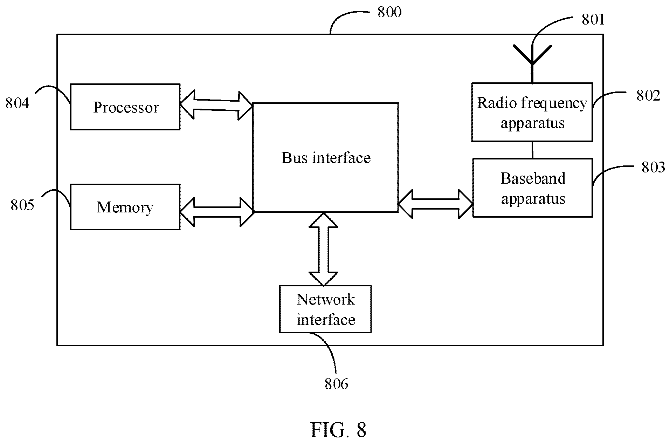

Specifically, an embodiment of this application further provides a network side device. As shown in FIG. 8, the network side device 800 includes an antenna 801, a radio frequency apparatus 802, a baseband apparatus 803, a processor 804, and a memory 805. The antenna 801 is connected to the radio frequency apparatus 802. In an uplink direction, the radio frequency apparatus 802 receives information through the antenna 801, and sends the received information to the baseband apparatus 803 for processing. In a downlink direction, the baseband apparatus 803 processes to-be-sent information, and sends processed information to the radio frequency apparatus 802. After processing the received information, the radio frequency apparatus 802 sends processed information through the antenna 801.

The method performed by the network side device in the foregoing embodiment may be implemented in the baseband apparatus 803. The baseband apparatus 803 includes a baseband processor.

For example, the baseband apparatus 803 may include at least one baseband board. A plurality of chips are disposed on the baseband board. As shown in FIG. 8, one of the chips is, for example, the baseband processor, and is connected to the memory 805 by using a bus interface, to invoke a program in the memory 805 to perform an operation of a network device shown in the foregoing method embodiment.

The network side device may further include a network interface 806, and the interface is, for example, a common public radio interface (Common Public Radio Interface, CPRI).

Specifically, the network side device 800 in this embodiment of the present invention further includes instructions or a program that is stored in the memory 805 and that can be run on the processor 804. The processor 804 invokes the instructions or the program in the memory 805 to perform the method performed by the modules shown in FIG. 5, and same technical effects are achieved. To avoid repetition, details are not described herein again.

The radio frequency apparatus 802 is configured to send a target configuration to a terminal. The target configuration is a configuration of at least one of a target operation and a bandwidth part BWP.

The target configuration is used to perform, by the terminal, at least one of the target operation and BWP switching based on the target configuration in a case that a preset condition corresponding to the target operation or a second BWP is met. The BWP switching includes switching from a first BWP to the second BWP.

In a case that the target operation and the BWP switching are to be performed, the target operation is preferentially performed, and then the BWP switching is performed; or the BWP switching is preferentially performed, and then the target operation is performed.

The target operation includes at least one of the following:
small data transmission SDT initiation, paging monitoring, PEI monitoring, wake-up signal WUS monitoring, random access, and system information receiving.

Optionally, the target configuration includes at least one of the following:
a configuration of the target operation; and
a configuration of the second BWP.

Optionally, the configuration of the target operation is used to configure at least one of the following:
a data volume threshold used to determine whether to initiate SDT;
a reference signal received power RSRP threshold used to determine whether to initiate the SDT;
an RSRP threshold selected and configured for a synchronization signal block SSB of configured grant CG-SDT;
an RSRP threshold selected and configured for a RACH resource of random access RA-SDT;
an RSRP threshold selected and configured for an uplink carrier of the RA-SDT;
paging search space;
CORESET;
random access channel RACH search space;
the RACH resource;
system information search space; and
common search space.

Optionally, the configuration of the target operation includes at least one of the following:
a per-BWP configuration of the target operation;
a per-cell configuration that is of the target operation and that is configured for the first BWP or the second BWP; and
a per-terminal configuration that is of the target operation and that is configured for the first BWP or the second BWP.

Optionally, the configuration of the second BWP is used to configure at least one of the following:
an SDT type on the second BWP; and
an SDT resource on the second BWP.

The network side device may improve transmission performance of the terminal.

An embodiment of this application further provides a readable storage medium. The readable storage medium stores a program or instructions. When executed by a processor, the program or the instructions implement processes in the BWP switching processing method and configuration sending method embodiments, and can achieve same technical effects. To avoid repetition, details are not described herein again.

The processor is a processor in the terminal in the foregoing embodiment. The readable storage medium includes a computer-readable storage medium, for example, a computer read-only memory ROM, a random access memory RAM, a magnetic disk, or an optical disc. In some examples, the readable storage medium may be a non-transient readable storage medium.

An embodiment of this application further provides a chip. The chip includes a processor and a communication interface. The communication interface is coupled to the processor. The processor is configured to run a program or instructions to implement the processes in the BWP switching processing method embodiment, and can achieve same technical effects. To avoid repetition, details are not described herein again.

It should be understood that the chip mentioned in this embodiment of this application can also be referred to as a system-level chip, a system chip, a chip system, a system on chip, or the like.

An embodiment of this application further provides a computer program/program product. The computer program/program product is stored in a storage medium. The computer program/program product is executed by at least one processor to implement the processes in the BWP switching processing method embodiment, and same technical effects can be achieved. To avoid repetition, details are not described herein again.

An embodiment of this application further provides a BWP switching processing system, including a terminal and a network side device. The terminal may be configured to perform the steps of the BWP switching processing method provided in the embodiments of this application, and the network side device may be configured to perform the steps of the configuration sending method provided in the embodiments of this application.

It should be noted that in this specification, the term "comprise", "include", or any of their variants is intended to cover a non-exclusive inclusion, so that a process, a method, an article, or an apparatus that includes a list of elements not only includes those elements but also includes other elements that are not expressly listed, or further includes elements inherent to such process, method, article, or apparatus. Without more constraints, an element preceded by "includes a ..." does not preclude the existence of additional identical elements in the process, method, article, or apparatus that includes the element. In addition, it should be noted that the scope of the method and apparatus in the implementations of this application is not limited to performing functions in a sequence shown or discussed, and may further include performing functions in a basically simultaneous manner or in a reverse sequence based on related functions. For example, the described method may be performed in an order different from the described order, and various steps may be added, omitted, or combined. In addition, features described with reference to some examples may be combined in other examples.

According to the foregoing descriptions of the implementations, a person skilled in the art may clearly understand that the method in the foregoing embodiments may be implemented by a computer software product and a necessary general-purpose hardware platform, or certainly may be implemented by hardware. The computer software product is stored in a storage medium (such as a ROM, a RAM, a magnetic disk, or an optical disc) and includes several instructions for instructing a terminal or a network side device to perform the methods described in the embodiments of this application.

The foregoing describes the embodiments of this application with reference to the accompanying drawings. However, this application is not limited to the foregoing specific implementations. The foregoing specific implementations are merely illustrative rather than restrictive. Inspired by this application, a person of ordinary skill in the art may develop many forms of implementations without departing from principles of this application and the protection scope of the claims, and all such implementations fall within the protection scope of this application.

## Claims

1. A bandwidth part BWP switching processing method, comprising:
obtaining, by a terminal, a target configuration, wherein the target configuration is a configuration of at least one of a target operation and a bandwidth part BWP; and
performing, by the terminal, at least one of the target operation and BWP switching based on the target configuration in a case that a preset condition corresponding to the target operation or a second BWP is met, wherein the BWP switching comprises switching from a first BWP to the second BWP, wherein
in a case that the target operation and the BWP switching are to be performed, the target operation is preferentially performed, and then the BWP switching is performed; or the BWP switching is preferentially performed, and then the target operation is performed; and
the target operation comprises at least one of the following:
small data transmission SDT initiation, paging monitoring, PEI monitoring, wake-up signal WUS monitoring, random access, and system information receiving.

2. The method according to claim 1, wherein the target configuration comprises at least one of the following:
a configuration of the target operation; and
a configuration of the second BWP.

3. The method according to claim 2, wherein the configuration of the target operation is used to configure at least one of the following:
a data volume threshold used to determine whether to initiate SDT;
a reference signal received power RSRP threshold used to determine whether to initiate the SDT;
an RSRP threshold selected and configured for a synchronization signal block SSB of configured grant CG-SDT;
an RSRP threshold selected and configured for a RACH resource of random access RA-SDT;
an RSRP threshold selected and configured for an uplink carrier of the RA-SDT;
paging search space;
a control resource set CORESET;
random access channel RACH search space;
the RACH resource;
system information search space; and
common search space.

4. The method according to claim 2 or 3, wherein the configuration of the target operation comprises at least one of the following:
a per-BWP configuration of the target operation;
a per-cell configuration that is of the target operation and that is configured for the first BWP or the second BWP; and
a per-terminal configuration that is of the target operation and that is configured for the first BWP or the second BWP.

5. The method according to any one of claims 2 to 4, wherein the configuration of the second BWP is used to configure at least one of the following:
an SDT type on the second BWP; and
an SDT resource on the second BWP.

6. The method according to any one of claims 1 to 5, wherein that the preset condition corresponding to the target operation or the second BWP is met comprises at least one of the following:
an execution condition of the target operation is met;
an execution condition of the BWP switching is met;
the second BWP is configured;
the configuration of the target operation is configured on the second BWP;
the configuration of the target operation is configured on the first BWP;
the configuration of the target operation is applicable to the second BWP;
the configuration of the target operation is applicable to the first BWP;
the target operation is configured on the first BWP;
the target operation is configured on the second BWP;
the target operation is applicable to the first BWP;
the target operation is applicable to the second BWP;
a type of the target operation configured on the first BWP is a preset type;
a type of the target operation configured on the second BWP is a preset type;
a resource of the target operation configured on the first BWP is a preset resource;
a resource of the target operation configured on the second BWP is a preset resource;
a type of the target operation applicable to the first BWP is a preset type;
a type of the target operation applicable to the second BWP is a preset type;
a resource of the target operation applicable to the first BWP is a preset resource; and
a resource of the target operation applicable to the second BWP is a preset resource.

7. The method according to any one of claims 1 to 6, wherein the first BWP comprises at least one of the following:
an initial BWP, a BWP configured with a cell defining CD-SSB, a BWP comprising CORESET#0, and a BWP for performing a first operation, wherein the first operation comprises at least one of the following:
system information receiving, paging monitoring, PEI monitoring, SSB receiving, random access, CD-SSB measurement, cell selection, cell reselection, camping, and SDT.

8. The method according to any one of claims 1 to 7, wherein the second BWP comprises at least one of the following:
a separate initial BWP, a RedCap-specific initial BWP, a BWP configured with a non-cell defining NCD-SSB, a BWP comprising no CORESET#0, a BWP configured with no CD-SSB, a non-initial BWP, another inter-band BWP, another intra-band BWP, another inter-frequency BWP, another intra-frequency BWP, and a BWP for performing a second operation, wherein the second operation comprises at least one of the following:
NCD-SSB receiving, NCD-SSB measurement, cell selection, cell reselection, camping, and SDT.

9. The method according to claim 8, wherein in a case that the second BWP comprises the separate initial BWP, SDT is configured on the separate initial BWP or SDT is applicable to the separate initial BWP; or
in a case that the target configuration indicates that the second BWP comprises the separate initial BWP, and no SDT is configured on the separate initial BWP or no SDT is applicable to the separate initial BWP, the terminal determines that the target configuration is invalid; or
in a case that the second BWP comprises the separate initial BWP, and no SDT is configured on the separate initial BWP or no SDT is applicable to the separate initial BWP, the terminal performs one of the following:
determining that SDT configured on the initial BWP or SDT applicable to the initial BWP is also applicable to the separate initial BWP; and
determining that SDT on the separate initial BWP or SDT applicable to the initial BWP is consistent with the SDT configured on the initial BWP or the SDT applicable to the initial BWP.

10. The method according to any one of claims 1 to 9, wherein the SDT comprises at least one of the following:
random access RA-SDT, subsequent transmission of the RA-SDT, configured grant CG-SDT, subsequent transmission of the CG-SDT.

11. The method according to any one of claims 1 to 10, wherein a priority of the BWP switching is higher than a priority of the target operation; or
a priority of the target operation is higher than a priority of the BWP switching; or
a network side configures preferentially performing the BWP switching; or
a network side configures preferentially performing the target operation.

12. The method according to any one of claims 1 to 11, wherein in a case that the target operation comprises the RA-SDT, the BWP switching is preferentially performed, and then the RA-SDT is performed; or
in a case that the target operation comprises the CG-SDT, the CG-SDT is preferentially performed, and then the BWP switching is performed; or
in a case that the target operation comprises the RA-SDT, the RA-SDT is preferentially performed, and then the BWP switching is performed; or
in a case that the target operation comprises the CG-SDT, the BWP switching is preferentially performed, and then the CG-SDT is performed.

13. The method according to any one of claims 1 to 12, wherein the performing at least one of the target operation and BWP switching comprises:
performing the BWP switching in a case that a BWP switching condition is met, and then performing the target operation if the second BWP meets an execution condition of the target operation; or
performing the target operation in a case that the execution condition of the target operation is met, and then performing the BWP switching if the BWP switching condition is met, wherein
the BWP switching condition comprises one of the following:
the second BWP is configured, an SDT resource exists on the second BWP, and the SDT type on the second BWP is a preset type; and
the execution condition of the target operation comprises:
an SDT resource is configured.

14. The method according to any one of claims 1 to 13, wherein the performing, by the terminal, at least one of the target operation and bandwidth part BWP switching based on the target configuration in a case that a preset condition corresponding to the target operation or a second BWP is met comprises:
switching, by the terminal, from the first BWP to the second BWP in a case that an SDT configuration is configured on the first BWP or SDT is applicable to the first BWP, and no SDT configuration is configured on the second BWP or no SDT is applicable to the second BWP; or
preferentially initiating, by the terminal, the SDT, and then switching from the first BWP to the second BWP, in a case that an SDT configuration is configured on the first BWP or SDT is applicable to the first BWP, and no SDT configuration is configured on the second BWP or no SDT is applicable to the second BWP; or
initiating, by the terminal, the SDT in a case that an SDT configuration is configured on the first BWP or SDT is applicable to the first BWP, and no SDT configuration is configured on the second BWP or no SDT is applicable to the second BWP.

15. The method according to claim 14, wherein the SDT initiation comprises at least one of the following:
initiating the SDT based on the SDT configuration configured on the first BWP; and
initializing an SDT process, wherein the SDT configuration is applied when SDT resource selection or data transmission is performed.

16. The method according to claim 14 or 15, wherein the method further comprises:
stopping or interrupting the SDT in a case of switching to the second BWP.

17. The method according to any one of claims 14 to 16, wherein the switching, by the terminal, from the first BWP to the second BWP in a case that an SDT configuration is configured on the first BWP or SDT is applicable to the first BWP, and no SDT configuration is configured on the second BWP or no SDT is applicable to the second BWP comprises:
switching, by the terminal, from the first BWP to the second BWP in a case that an SDT configuration is configured on the first BWP or SDT is applicable to the first BWP, no SDT configuration is configured on the second BWP or no SDT is applicable to the second BWP, and a first condition is met, wherein
that the first condition is met comprises at least one of the following:
SDT configured by the SDT configuration on the first BWP is RA-SDT;
an SDT resource configured by the SDT configuration on the first BWP is an RA-SDT resource;
the terminal determines that initiated or executed SDT is RA-SDT; and
for the RA-SDT, the network side configures preferentially performing the BWP switching; or
that the first condition is met comprises at least one of the following:
SDT configured by the SDT configuration on the first BWP is CG-SDT;
an SDT resource configured by the SDT configuration on the first BWP is a CG-SDT resource;
the terminal determines that initiated or executed SDT is CG-SDT; and
for the CG-SDT, the network side configures preferentially performing the BWP switching.

18. The method according to any one of claims 14 to 16, wherein the SDT initiation is initiating the CG-SDT in a second condition, and the second condition comprises at least one of the following:
SDT configured by the SDT configuration on the first BWP is CG-SDT;
an SDT resource configured by the SDT configuration on the first BWP is a CG-SDT resource;
the terminal determines that initiated or executed SDT is CG-SDT; and
for the CG-SDT, the network side configures preferentially initiating the SDT; or
the SDT initiation is initiating the RA-SDT in a second condition, and the second condition comprises at least one of the following:
SDT configured by the SDT configuration on the first BWP is RA-SDT;
an SDT resource configured by the SDT configuration on the first BWP is an RA-SDT resource;
the terminal determines that initiated or executed SDT is RA-SDT; and
for the RA-SDT, the network side configures preferentially initiating the SDT.

19. The method according to any one of claims 1 to 13, wherein the performing, by the terminal, at least one of the target operation and bandwidth part BWP switching based on the target configuration in a case that a preset condition corresponding to the target operation or a second BWP is met comprises:
preferentially switching, by the terminal, from the first BWP to the second BWP, and then initiating the SDT, in a case that an SDT configuration is configured on the first BWP or SDT is applicable to the first BWP, and an SDT configuration is configured on the second BWP or SDT is applicable to the second BWP; or
preferentially initiating, by the terminal, the SDT, and then switching from the first BWP to the second BWP, in a case that an SDT configuration is configured on the first BWP or SDT is applicable to the first BWP, and an SDT configuration is configured on the second BWP or SDT is applicable to the second BWP.

20. The method according to claim 19, wherein the SDT initiation comprises at least one of the following:
initiating the SDT based on the SDT configuration configured on the second BWP; or
initializing an SDT process, wherein the SDT configuration is applied when SDT resource selection or data transmission is performed;
initiating the SDT based on the SDT configuration configured on the first BWP; and
initiating the SDT based on an SDT configuration configured on a current BWP.

21. The method according to claim 19 or 20, wherein the preferentially switching, by the terminal, from the first BWP to the second BWP, and then initiating the SDT, in a case that an SDT configuration is configured on the first BWP or SDT is applicable to the first BWP, and an SDT configuration is configured on the second BWP or SDT is applicable to the second BWP comprises:
preferentially switching, by the terminal, from the first BWP to the second BWP, and then initiating the SDT, in a case that an SDT configuration is configured on the first BWP or SDT is applicable to the first BWP, an SDT configuration is configured on the second BWP or SDT is applicable to the second BWP, and a third condition is met, wherein
that the third condition is met comprises at least one of the following:
SDT configured by the SDT configuration on the first BWP is RA-SDT;
an SDT resource configured by the SDT configuration on the first BWP is an RA-SDT resource;
SDT configured by the SDT configuration on the second BWP is RA-SDT;
an SDT resource configured by the SDT configuration on the second BWP is an RA-SDT resource; and
the terminal determines that initiated or executed SDT is RA-SDT; and
for the RA-SDT, the network side configures preferentially performing the BWP switching; or
that the third condition is met comprises at least one of the following:
SDT configured by the SDT configuration on the first BWP is CG-SDT;
an SDT resource configured by the SDT configuration on the first BWP is a CG-SDT resource;
SDT configured by the SDT configuration on the second BWP is CG-SDT;
an SDT resource configured by the SDT configuration on the second BWP is a CG-SDT resource;
the terminal determines that initiated or executed SDT is CG-SDT; and
for the CG-SDT, the network side configures preferentially performing the BWP switching.

22. The method according to claim 19 or 20, wherein the preferentially initiating, by the terminal, the SDT, and then switching from the first BWP to the second BWP, in a case that an SDT configuration is configured on the first BWP or SDT is applicable to the first BWP, and an SDT configuration is configured on the second BWP or SDT is applicable to the second BWP comprises:
preferentially initiating, by the terminal, the SDT, and then switching from the first BWP to the second BWP, in a case that an SDT configuration is configured on the first BWP or SDT is applicable to the first BWP, an SDT configuration is configured on the second BWP or SDT is applicable to the second BWP, and a fourth condition is met, wherein
that the fourth condition is met comprises at least one of the following:
SDT configured by the SDT configuration on the first BWP is CG-SDT;
an SDT resource configured by the SDT configuration on the first BWP is a CG-SDT resource;
SDT configured by the SDT configuration on the second BWP is CG-SDT;
an SDT resource configured by the SDT configuration on the second BWP is a CG-SDT resource;
the terminal determines that initiated or executed SDT is CG-SDT; and
for the CG-SDT, the network side configures preferentially initiating the SDT; or
that the fourth condition is met comprises at least one of the following:
SDT configured by the SDT configuration on the first BWP is RA-SDT;
an SDT resource configured by the SDT configuration on the first BWP is an RA-SDT resource;
SDT configured by the SDT configuration on the second BWP is RA-SDT;
an SDT resource configured by the SDT configuration on the second BWP is an RA-SDT resource;
the terminal determines that initiated or executed SDT is RA-SDT; and
for the RA-SDT, the network side configures preferentially initiating the SDT.

23. The method according to any one of claims 1 to 13, wherein the performing, by the terminal, at least one of the target operation and BWP switching based on the target configuration in a case that a preset condition corresponding to the target operation or a second BWP is met comprises:
preferentially switching, by the terminal, from the first BWP to the second BWP, and then initiating the SDT, in a case that no SDT configuration is configured on the first BWP or no SDT is applicable to the first BWP, and an SDT configuration is configured on the second BWP or SDT is applicable to the second BWP; or
preferentially initiating, by the terminal, the SDT, and then switching from the first BWP to the second BWP, in a case that no SDT configuration is configured on the first BWP or no SDT is applicable to the first BWP, and an SDT configuration is configured on the second BWP or SDT is applicable to the second BWP; or
switching, by the terminal, from the first BWP to the second BWP in a case that no SDT configuration is configured on the first BWP or no SDT is applicable to the first BWP, and an SDT configuration is configured on the second BWP or SDT is applicable to the second BWP.

24. The method according to claim 23, wherein the SDT initiation comprises at least one of the following:
initiating the SDT based on the SDT configuration configured on the second BWP; or
initiating an initial SDT process, wherein an SDT configuration is selected for application when SDT resource selection or data transmission is performed; and
initiating the SDT based on an SDT configuration configured on a current BWP.

25. The method according to claim 20 or 24, wherein the method further comprises:
after switching to the second BWP, performing, by the terminal, SDT based on the SDT configuration configured on the second BWP.

26. The method according to any one of claims 23 to 25, wherein the preferentially switching, by the terminal, from the first BWP to the second BWP, and then initiating the SDT, in a case that no SDT configuration is configured on the first BWP or no SDT is applicable to the first BWP, and an SDT configuration is configured on the second BWP or SDT is applicable to the second BWP comprises:
preferentially switching, by the terminal, from the first BWP to the second BWP, and then initiating the SDT, in a case that no SDT configuration is configured on the first BWP or no SDT is applicable to the first BWP, an SDT configuration is configured on the second BWP or SDT is applicable to the second BWP, and a fifth condition is met, wherein
that the fifth condition is met comprises at least one of the following:
SDT configured by the SDT configuration on the second BWP is RA-SDT;
an SDT resource configured by the SDT configuration on the second BWP is an RA-SDT resource;
the terminal determines that initiated or executed SDT is RA-SDT; and
for the RA-SDT, the network side configures preferentially performing the BWP switching; or
that the fifth condition is met comprises at least one of the following:
SDT configured by the SDT configuration on the second BWP is CG-SDT;
an SDT resource configured by the SDT configuration on the second BWP is a CG-SDT resource;
the terminal determines that initiated or executed SDT is CG-SDT; and
for the CG-SDT, the network side configures preferentially performing the BWP switching.

27. The method according to any one of claims 23 to 25, wherein the preferentially switching, by the terminal, initiating the SDT, and then switching from the first BWP to the second BWP, in a case that no SDT configuration is configured on the first BWP or no SDT is applicable to the first BWP, and an SDT configuration is configured on the second BWP or SDT is applicable to the second BWP comprises:
preferentially initiating, by the terminal, the SDT, and then switching from the first BWP to the second BWP, in a case that no SDT configuration is configured on the first BWP or no SDT is applicable to the first BWP, an SDT configuration is configured on the second BWP or SDT is applicable to the second BWP, and a sixth condition is met, wherein
that the sixth condition is met comprises at least one of the following:
SDT configured by the SDT configuration on the second BWP is CG-SDT;
an SDT resource configured by the SDT configuration on the second BWP is a CG-SDT resource;
the terminal determines that initiated or executed SDT is CG-SDT; and
for the CG-SDT, the network side configures preferentially initiating the SDT; or
that the sixth condition is met comprises at least one of the following:
SDT configured by the SDT configuration on the second BWP is RA-SDT;
an SDT resource configured by the SDT configuration on the second BWP is an RA-SDT resource;
the terminal determines that initiated or executed SDT is RA-SDT; and
for the RA-SDT, the network side configures preferentially initiating the SDT.

28. The method according to any one of claims 1 to 27, wherein in a case that an SDT configuration of the target operation is a per-cell configuration, the SDT configuration is applied to all BWPs.

29. The method according to any one of claims 1 to 28, wherein in a case that the target operation comprises performing the SDT at the initial BWP, performing the SDT on the separate initial BWP comprises at least one of the following:
sending an uplink signal on an initial uplink BWP; and
monitoring a downlink signal on an initial downlink BWP.

30. The method according to any one of claims 1 to 29, wherein the performing at least one of the target operation and BWP switching comprises:
in a case that the terminal is configured with the SDT and the second BWP, preferentially performing the SDT, and then switching from the first BWP to the second BWP.

31. A configuration sending method, comprising:
sending, by a network side device, a target configuration to a terminal, wherein the target configuration is a configuration of at least one of a target operation and a bandwidth part BWP, wherein
the target configuration is used to perform, by the terminal, at least one of the target operation and BWP switching based on the target configuration in a case that a preset condition corresponding to the target operation or a second BWP is met, wherein the BWP switching comprises switching from a first BWP to the second BWP;
in a case that the target operation and the BWP switching are to be performed, the target operation is preferentially performed, and then the BWP switching is performed; or the BWP switching is preferentially performed, and then the target operation is performed; and
the target operation comprises at least one of the following:
small data transmission SDT initiation, paging monitoring, PEI monitoring, wake-up signal WUS monitoring, random access, and system information receiving.

32. The method according to claim 31, wherein the target configuration comprises at least one of the following:
a configuration of the target operation; and
a configuration of the second BWP.

33. The method according to claim 32, wherein the configuration of the target operation is used to configure at least one of the following:
a data volume threshold used to determine whether to initiate SDT;
a reference signal received power RSRP threshold used to determine whether to initiate the SDT;
an RSRP threshold selected and configured for a synchronization signal block SSB of configured grant CG-SDT;
an RSRP threshold selected and configured for a RACH resource of random access RA-SDT;
an RSRP threshold selected and configured for an uplink carrier of the RA-SDT;
paging search space;
CORESET;
random access channel RACH search space;
the RACH resource;
system information search space; and
common search space.

34. The method according to claim 32 or 33, wherein the configuration of the target operation comprises at least one of the following:
a per-BWP configuration of the target operation;
a per-cell configuration that is of the target operation and that is configured for the first BWP or the second BWP; and
a per-terminal configuration that is of the target operation and that is configured for the first BWP or the second BWP.

35. The method according to any one of claims 32 to 34, wherein the configuration of the second BWP is used to configure at least one of the following:
an SDT type on the second BWP; and
an SDT resource on the second BWP.

36. A bandwidth part BWP switching processing apparatus, comprising:
an obtaining module, configured to obtain a target configuration, wherein the target configuration is a configuration of at least one of a target operation and a bandwidth part BWP; and
an execution module, configured to perform at least one of the target operation and BWP switching based on the target configuration in a case that a preset condition corresponding to the target operation or a second BWP is met, wherein the BWP switching comprises switching from a first BWP to the second BWP, wherein
in a case that the target operation and the BWP switching are to be performed, the target operation is preferentially performed, and then the BWP switching is performed; or the BWP switching is preferentially performed, and then the target operation is performed; and
the target operation comprises at least one of the following:
small data transmission SDT initiation, paging monitoring, PEI monitoring, wake-up signal WUS monitoring, random access, and system information receiving.

37. A configuration sending apparatus, comprising:
a sending module, configured to send a target configuration to a terminal, wherein the target configuration is a configuration of at least one of a target operation and a bandwidth part BWP, wherein
the target configuration is used to perform, by the terminal, at least one of the target operation and BWP switching based on the target configuration in a case that a preset condition corresponding to the target operation or a second BWP is met, wherein the BWP switching comprises switching from a first BWP to the second BWP;
in a case that the target operation and the BWP switching are to be performed, the target operation is preferentially performed, and then the BWP switching is performed; or the BWP switching is preferentially performed, and then the target operation is performed; and
the target operation comprises at least one of the following:
small data transmission SDT initiation, paging monitoring, PEI monitoring, wake-up signal WUS monitoring, random access, and system information receiving.

38. A terminal, comprising a processor and a memory, wherein the memory stores a program or instructions capable of being run on the processor, and when executed by the processor, the program or the instructions implement the steps of the bandwidth part BWP switching processing method according to any one of claims 1 to 30.

39. A network side device, comprising a processor and a memory, wherein the memory stores a program or instructions capable of being run on the processor, and when executed by the processor, the program or the instructions implement the steps of the configuration sending method according to any one of claims 31 to 35.

40. A readable storage medium, wherein the readable storage medium stores a program or instructions, and when executed by the processor, the program or the instructions implement the steps of the bandwidth part BWP switching processing method according to any one of claims 1 to 30, or when executed by the processor, the program or the instructions implement the steps of the configuration sending method according to any one of claims 31 to 35.
